# EUROPEAN PATENT SPECIFICATION

(11) **EP 4 297 184 B1**
(45) Date of publication and mention of the grant of the patent: **12.11.2025**
(21) Application number: 23157220.7
(22) Date of filing: 17.02.2023
(51) Int. Cl.: H01Q 1/24, H01Q 9/42

(54) **ELECTRONIC DEVICE INCLUDING MICROSTRIP TRANSMISSION LINE**
ELEKTRONISCHE VORRICHTUNG MIT MIKROSTREIFENÜBERTRAGUNGSLEITUNG
DISPOSITIF ÉLECTRONIQUE COMPRENANT UNE LIGNE DE TRANSMISSION À MICRORUBAN

(30) Priority: 22.06.2022 KR 20220076242; 07.07.2022 KR 20220083609
(43) Date of publication of application: 27.12.2023
(73) Proprietor: Samsung Electronics Co., Ltd., Suwon-si, Gyeonggi-do 16677 (KR)
(72) Inventor: Park, Chanho, 16677 Suwon-si, Gyeonggi-do (KR); Yoo, Donghyun, 16677 Suwon-si, Gyeonggi-do (KR); Ju, Wanjae, 16677 Suwon-si, Gyeonggi-do (KR); Han, Gyucheol, 16677 Suwon-si, Gyeonggi-do (KR)
(74) Representative: Gulde & Partner

(56) References cited:
- EP-A1- 2 797 168
- US-A1- 2005 168 383
- US-A1- 2013 099 978
- US-A1- 2014 055 315

## Description

### [Technical Field]

An embodiment of the disclosure relates to an electronic device, for example, an electronic device including a transmission line using a microstrip line.

### [Background Art]

Typically, an electronic device may mean a device that performs a specific function according to a program provided therein (e.g., an electronic scheduler, a portable multimedia reproducer, a mobile communication terminal, a tablet PC, an image/sound device, a desktop/laptop PC, or a vehicle navigation system), as well as a home appliance. For example, these electronic devices may output information stored therein as sound or image. With the increase of degree of integration of electronic devices and the generalization of ultra-high-speed or high-capacity wireless communication, recently, a single electronic device, such as a mobile communication terminal, may be provided with various functions. For example, various functions, such as an entertainment function such as a game, a multimedia function such as music/video playback, or a communication and security function for mobile banking or the like, and/or a schedule management or e-wallet function, are integrated in a single electronic device, in addition to a communication function. As the degree of integration of electronic devices increases, portability is further improved, leading to the commercialization of wearable electronic devices such as wristwatch-type or eyeglass-type electronic devices, which may make the electronic devices more convenient to carry and use.

The above-described information may be provided as background for the purpose of helping understanding of the disclosure. No claim or determination is made as to whether any of the foregoing may be applied as prior art with respect to the disclosure.

EP2797168A1 discloses a monopole antenna with a tapered balun. US20130099978A1 discloses an internal printed antenna. US20140055315A1 a wireless telephone coupled antenna. US20050168383A1 discloses implementation of an antenna for a wireless communication device.

### [Detailed Description of the Invention]

### [Technical Solution]

The invention is defined by the appended set of claims. The description that follows is subjected to this limitation. Any disclosure lying outside the scope of said claims is only intended for illustrative as well as comparative purposes.

According to an embodiment, an electronic device includes a housing, a circuit board accommodated inside the housing, a first plate disposed inside the housing to at least partially face the circuit board, a transmission line disposed on one (hereinafter, "first surface") of opposite surfaces of the first plate and electrically connected to the circuit board, a ground conductor disposed on another one (hereinafter "second surface") of the opposite surfaces of the first plate and electrically connected to the circuit board, and a radiation conductor pattern disposed on one of the first surface and the second surface and electrically connected to one end of the transmission line. The transmission line is disposed to at least partially overlap the ground conductor when viewed from one of the first surface and second surface, and the transmission line is configured to transmit a wireless communication signal transmitted or received via the radiation conductor pattern.

### [Brief Description of Drawings]

The above-described aspects or other aspects, configurations, and/or advantages regarding an embodiment of the disclosure may become more apparent through the following detailed description made with reference to the accompanying drawings.
FIG. 1 is a perspective view illustrating an electronic device according to an embodiment of the disclosure, viewed from the front side.
FIG. 2 is a perspective view illustrating the electronic device of FIG. 1 according to an embodiment of the disclosure, viewed from the rear side.
FIG. 3 is an exploded perspective view illustrating the electronic device of FIG. 1 according to an embodiment of the disclosure, viewed from the front side.
FIG. 4 is an exploded perspective view illustrating the electronic device of FIG. 1 according to an embodiment of the disclosure, viewed from the rear side.
FIG. 5 is a view illustrating an electronic device according to an embodiment of the disclosure, cut along line A-A' in FIG. 2.
FIG. 6 is a view illustrating a first surface of a first plate of an electronic device according to an embodiment of the disclosure.
FIG. 7 is a view illustrating a second surface of the first plate of the electronic device according to an embodiment of the disclosure.
FIG. 8 is a view illustrating a first surface of a first plate of an electronic device according to an embodiment of the disclosure.
FIG. 9 is a view illustrating the first plate of the electronic device according to an embodiment of the disclosure, cut along line C-C' in FIG. 8.
FIG. 10 is a view illustrating an electronic device according to an embodiment of the disclosure, cut along line B-B' of FIG. 2.
FIG. 11 is a view illustrating a first surface of a first plate of an electronic device according to an embodiment of the disclosure.
FIG. 12 is a view illustrating a second surface of the first plate of the electronic device according to an embodiment of the disclosure.
FIG. 13 is a view illustrating a first surface of a first plate of an electronic device according to an embodiment of the disclosure.
FIG. 14 is a view illustrating a second surface of the first plate of the electronic device according to an embodiment of the disclosure.
FIG. 15 is a view illustrating a first surface of the first plate of the electronic device according to an embodiment of the disclosure.
FIG. 16 is a view illustrating a second surface of the first plate of the electronic device according to an embodiment of the disclosure.
FIG. 17 is a view illustrating an electronic device according to an embodiment of the disclosure, cut along line A-A' in FIG. 2.

Throughout the appended drawings, like reference numerals may be assigned to like parts, components, and/or structures.

### [Mode for Carrying out the Invention]

As the use of portable electronic devices such as mobile communication terminals or tablet personal computers (PCs) has become commonplace, competition for downsizing and weight reduction of electronic devices is intensifying. For example, as an electronic device has a narrowed inner space, the degree of freedom in design may be lowered in the arrangement of various electrical/electronic components or in implementing an antenna structure (e.g., a radiation conductor and/or a transmission line between the radiation conductor and a communication circuit).

An embodiment of the disclosure may provide an electronic device improved in the degree of freedom in design in the arrangement of an antenna structure by using a microstrip transmission line.

An embodiment of the disclosure may provide an electronic device including a transmission line provided with a stable operating environment while being easily arranged in a narrow inner space.

The technical problems to be addressed by this disclosure are not limited to those described above, and other technical problems, which are not described above, may be clearly understood by a person ordinarily skilled in the related art, to which this disclosure belongs.

According to an embodiment of the disclosure, by arranging a transmission line and/or a radiation conductor pattern using a microstrip on a plate disposed inside a housing, it may be easy to implement or arrange an antenna structure even in a narrow space. In an embodiment, since it is possible to form a transmission line (or a radiation conductor pattern) on a plate through a printing, plating, deposition, or laser direct structuring (LDS) process, the degree of freedom in design may be improved in the shape or position of the transmission line (or the radiation conductor pattern). In an embodiment, by arranging a ground conductor corresponding to a transmission line on a plate, a stable transmission environment of a feed signal may be provided.

Effects that are capable of being obtained by the embodiment(s) of the disclosure are not limited to those described above, and other effects not described above may be clearly understood by a person ordinarily skilled in the art to which the disclosure belongs based on the following description.

The following description made with reference to the appended drawings may provide an understanding of various exemplary implementations of the disclosure, including the claims and their equivalents. An exemplary embodiment disclosed in the following descriptions includes various specific details to help understanding, but is considered to be one of various exemplary embodiments. Accordingly, it will be apparent to those skilled in the art that various changes and modifications of the various implementations described herein can be made without departing from the scope of the disclosure. In addition, descriptions of well-known functions and configurations may be omitted for clarity and brevity.

The terms and words used in the following description and claims are not limited to a bibliographical meaning, but may be used to describe an embodiment of the disclosure clearly and consistently. Therefore, it will be obvious to those skilled in the art that the following description of various implementations of the disclosure is provided for the purpose of explanation, not for the purpose of limiting the disclosure defined as the scope of rights and equivalents thereto.

It should be understood that the singular forms of "a," "an," and "the" contain the meaning of "plural," unless the context clearly indicates otherwise. Thus, for example, "a component surface" may be understood to include one or more of the surfaces of a component.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used in the disclosure, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. **In** such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

In the following detailed description, a length direction, a width direction, and/or a thickness direction of an electronic device may be referred to, wherein the length direction may be defined as the "Y-axis direction", the width direction may be defined as the "X-axis direction", and/or the thickness direction may be defined as the "Z-axis direction." In an embodiment, "negative/positive (-/+)" may be referred to together with the Cartesian coordinate system illustrated in the drawings regarding the directions in which components are oriented. For example, the front surface of an electronic device or a housing may be defined as a "surface facing the +Z direction," and the rear surface may be defined as a "surface facing the -Z direction." In an embodiment, a side surface of the electronic device and/or the housing may include an area facing the +X direction, an area facing the +Y direction, an area facing the -X direction, or an area facing the -Y direction. In an embodiment, the "X-axis direction" may include both the "-X direction" and the "+X direction." It is noted that these are based on the Cartesian coordinate system described in the drawings for the sake of brevity of description, and the descriptions of these directions or components do not limit various embodiments of the disclosure. For example, the direction the front surface or the rear surface faces may vary depending on a state in which the electronic device is placed on a flat surface, or a relative alignment state of housings when the electronic device includes a plurality of housings, and the above-mentioned directions may be differently understood according to a user's gripping habit.

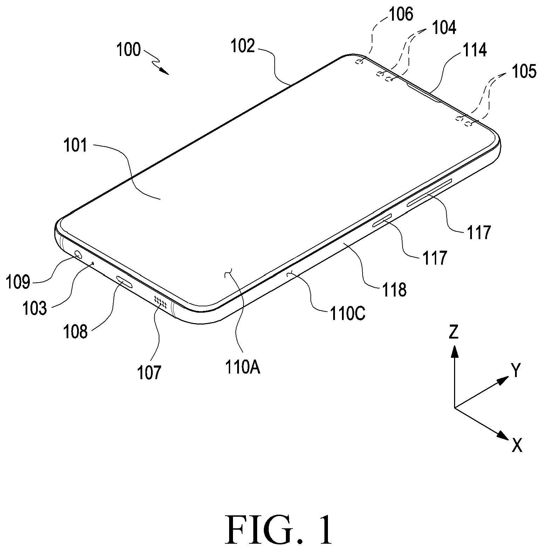

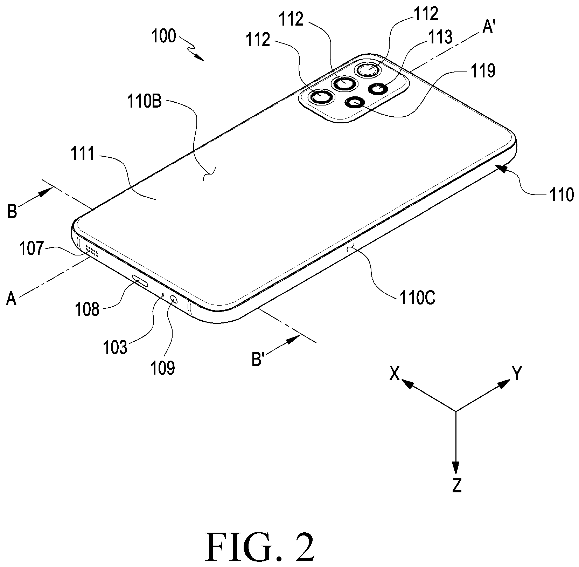

FIG. 1 is a perspective view illustrating an electronic device 100 according to an embodiment of the disclosure, viewed from the front side. FIG. 2 is a perspective view illustrating the electronic device 100 of FIG. 1 according to an embodiment of the disclosure, viewed from the rear side.

Referring to FIGS. 1 and 2, the electronic device 100 according to an embodiment may include a housing 110 including a first surface (or a front surface) 110A, a second surface (or a rear surface) 110B, and a side surface 110C surrounding the space between the first surface 110A and the second surface 110B. In an embodiment (not illustrated), the housing 110 may refer to a structure that defines some of the first surface 110A of FIG. 1, and the second surface 110B and the side surface 110C of FIG. 2. According to an embodiment, at least a portion of the first surface 110A may be configured with a substantially transparent front surface plate 102 (e.g., a glass plate or a polymer plate including various coating layers). The second surface 110B may be configured with a substantially opaque rear surface plate 111. The rear surface plate 111 may be made of, for example, coated or colored glass, ceramic, polymer, metal (e.g., aluminum, stainless steel (STS), or magnesium), or a combination of two or more of these materials. The side surface 110C may be configured with a side surface structure 118 (e.g., "side bezel structure") coupled to the front surface plate 102 and the rear surface plate 111 and including metal and/or polymer. In an embodiment, the rear surface plate 111 and the side surface structure 118 may be configured integrally with each other, and may include the same material (e.g., a metal material such as aluminum).

Although not illustrated, the front surface plate 102 may include area(s) that extends seamlessly from at least a portion of an edge toward the rear surface plate 111. In an embodiment, the front surface plate 102 (or the rear surface plate 111) may include only one of the areas bent and extending toward the rear surface plate 111 (or the front surface plate 102), at one side edge of the first surface 110A. According to an embodiment, the front surface plate 102 or the rear surface plate 111 may have a substantially flat plate shape, and in this case, may not include a bent and extending area. When the bent and extending area is included, the thickness of the electronic device 100 in the portion including the bent and extending area may be smaller than the thicknesses of other portions.

According to an embodiment, the electronic device 100 may include at least one of a display 101, audio modules 103, 107, and 114, sensor modules 104 and 119, camera modules 105, 112, and 113, key input devices 117, light-emitting elements 106, and connector holes 108 and 109. In an embodiment, in the electronic device 100, at least one of the components (e.g., the key input devices 117 or the light-emitting elements 106) may be omitted, or other components may be additionally included.

The display 101 may be exposed through a substantial portion of, for example, the front surface plate 102. In an embodiment, at least a portion of the display 101 may be exposed through the front surface plate 102 defining the first surface 110A or through a portion of the side surface 110C. In an embodiment, the edges of the display 101 may be configured to be substantially the same as the shape of the periphery of the front surface plate 102 adjacent thereto. In an embodiment (not illustrated), the distance between the periphery of the display 101 and the periphery of the front surface plate 102 may be substantially constant in order to enlarge the exposed area of the display 101.

In an embodiment (not illustrated), recesses or openings may be provided in some portions of the screen display area of the display 101, and one or more of the audio module 114, the sensor module 104, the camera module 105, and the light-emitting elements 106 may be aligned with the recesses or the openings. In an embodiment (not illustrated), the rear surface of the screen display area of the display 101 may include at least one of the audio module 114, the sensor modules 104, the camera modules 105, a fingerprint sensor (not illustrated), and the light-emitting elements 106. In an embodiment (not illustrated), the display 101 may be coupled to or disposed adjacent to a touch-sensitive circuit, a pressure sensor capable of measuring a touch intensity (pressure), and/or a digitizer configured to detect an electromagnetic field-type stylus pen. In an embodiment, at least some of the sensor modules 104 and 119 and/or at least some of the key input devices 117 may be disposed in the first areas 110D and/or the second areas 110E.

The audio modules 103, 107, and 114 may include a microphone hole 103 and speaker holes 107 and 114. The microphone hole 103 may include a microphone disposed therein to acquire external sound, and in an embodiment, a plurality of microphones may be disposed therein to be able to detect the direction of sound. The speaker holes 107 and 114 may include an external speaker hole 107 and a call receiver hole 114. In an embodiment, the speaker holes 107 and 114 and the microphone hole 103 may be implemented as a single hole, or a speaker may be included without the speaker holes 107 and 114 (e.g., a piezo speaker).

The sensor modules 104 and 119 may generate electrical signals or data values corresponding to the internal operating state or the external environmental state of the electronic device 100. The sensor modules 104 and 119 may include, for example, a first sensor module 104 (e.g., a proximity sensor) and/or a second sensor module (not illustrated) (e.g., a fingerprint sensor) disposed on the first surface 110A of the housing 110, and/or a third sensor module 119 and/or a fourth sensor module (e.g., a fingerprint sensor) disposed on the second surface 110B of the housing 110. The fingerprint sensor may be disposed not only on the first surface 110A (e.g., the display 101) of the housing 110, but also on the second surface 110B or the side surface 110C of the housing 110. The electronic device 100 may further include at least one of, for example, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 104.

The camera modules 105, 112, and 113 may include a first camera device 105 disposed on the first surface 110A of the electronic device 100, and a second camera device 112 and/or a flash 113 disposed on the second surface 110B of the electronic device 100. The camera devices 105 and 112 may include one or more lenses, an image sensor, and/or an image signal processor. The flash 113 may include, for example, a light-emitting diode or a xenon lamp. In an embodiment, one or more lenses (e.g., an infrared camera lens, a wide-angle lens, and a telephoto lens) and image sensors may be disposed on one surface of the electronic device 100. In an embodiment, the flash 113 may emit infrared light, and the infrared light emitted by the flash 113 and reflected by a subject may be received through the third sensor module 119. The electronic device 100 or the processor of the electronic device 100 may detect depth information of the subject based on a time point when infrared rays are received from the third sensor module 119.

The key input devices 117 may be disposed on the side surface 110C of the housing 110. In an embodiment, the electronic device 100 may not include some or all of the above-mentioned key input devices 117, and a key input device 117, which is not included, may be implemented in another form, such as a soft key, on the display 101. In an embodiment, a key input device may include a sensor module disposed on the second surface 110B of the housing 110.

The light-emitting elements 106 may be disposed, for example, on the first surface 110A of the housing 110. The light-emitting elements 106 may provide, for example, the state information of the electronic device 100 in an optical form. In an embodiment, the light-emitting elements 106 may provide a light source that is interlocked with, for example, the operation of the camera module 105. The light-emitting elements 106 may include, for example, an LED, an IR LED, and a xenon lamp.

The connector holes 108 and 109 may include a first connector hole 108, which is capable of accommodating a connector (e.g., a USB connector) for transmitting/receiving power and/or data to/from an external electronic device, and/or a second connector hole 109, which is capable of accommodating a connector (e.g., an earphone jack) for transmitting/receiving an audio signal to/from an external electronic device.

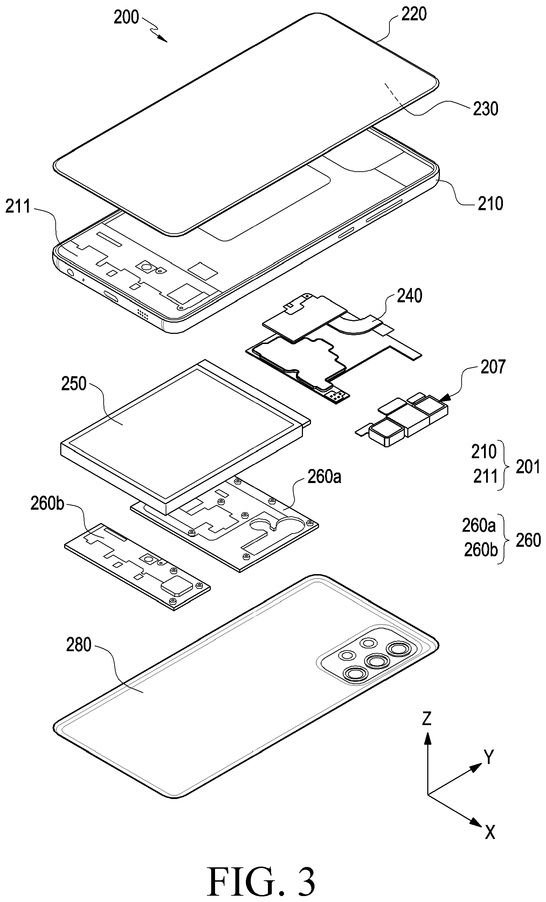

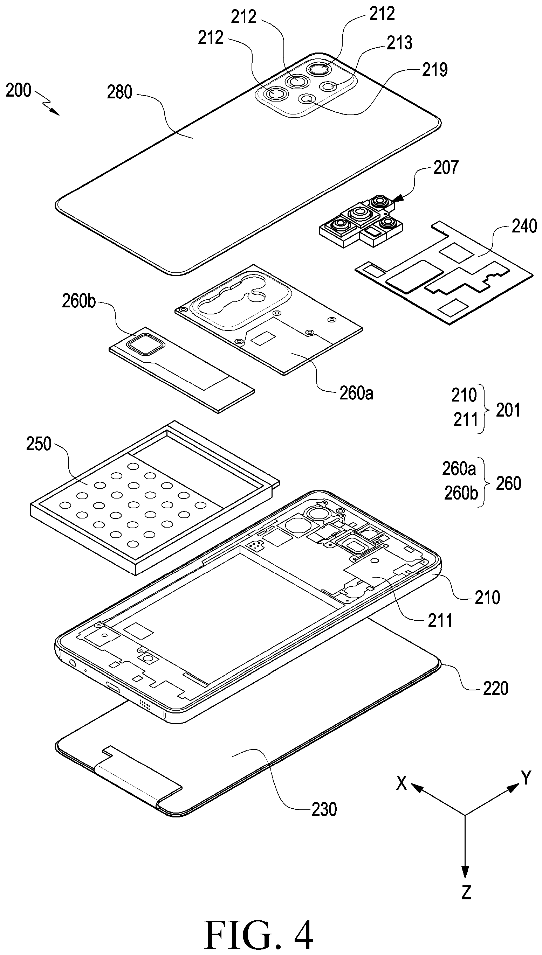

FIG. 3 is an exploded perspective view of the electronic device 200 illustrated in FIG. 1 according to an embodiment of the disclosure, viewed from the front side. FIG. 4 is an exploded perspective view of the electronic device 200 illustrated in FIG. 1 according to an embodiment of the disclosure, viewed from the rear side.

Referring to FIGS. 3 and 4, the electronic device 200 (e.g., the electronic device 100 in FIG. 1 or FIG. 2) may include a side surface structure 210, a first support member 211 (e.g., a bracket), a front surface plate 220 (e.g., the front surface plate 102 in FIG. 1), a display 230 (e.g., the display 101 in FIG. 1), a printed circuit board (or a substrate assembly) 240, a battery 250, a second support member 260 (e.g., a rear case), an antenna, a camera assembly 207, and a rear surface plate 280 (e.g., the rear surface plate 111 in FIG. 2). In an embodiment, in the electronic device 200, at least one of the components (e.g., the first support member 211 or the second support member 260) may be omitted, or other components may be additionally included. At least one of the components of the electronic device 200 may be the same as or similar to at least one of the components of the electronic device 100 of FIG. 1 or 2, and a redundant description thereof will be omitted below.

The first support member 211 may be disposed inside the electronic device 200, and may be connected to the side surface structure 210 or may be configured integrally with the side surface structure 210. The first support member 211 may be made of, for example, an electrically conductive material, a metal material, a non-conductive material, a dielectric material, and/or a non-metal (e.g., polymer) material. When at least partially being made of a metal material or an electrically conductive material, a portion of the side surface structure 210 or the first support member 211 may serve as an antenna. The first support member 211 may include one surface to which the display 230 is coupled and the other surface to which the printed circuit board 240 is coupled. A processor, memory, and/or interface may be mounted on the printed circuit board 240. The processor may include one or more of, for example, a central processing unit, an application processor, a graphics processor, an image signal processor, a sensor hub processor, or a communication processor.

According to an embodiment, the first support member 211 and the side surface structure 210 may be combined to be referred to as a front case or a housing 201. According to an embodiment, the housing 201 may be generally understood as a structure for accommodating, protecting, or disposing a printed circuit board 240 or a battery 250. In an embodiment, it may be understood that the housing 201 includes a structure that a user may visually or tactfully recognize from the appearance of the electronic device 200, such as the side surface structure 210, the front surface plate 220, and/or the rear surface plate 280. In an embodiment, the "front surface or rear surface of the housing 201" may be understood as the first surface 110A in FIG. 1 or the second surface 110B in FIG. 2. In an embodiment, the first support member 211 may be disposed between the front surface plate 220 (e.g., the first surface 110A in FIG. 1) and the rear surface plate 280 (e.g., the second surface 110B in FIG. 2), and may serve as a structure on which electrical/electronic components, such as a printed circuit board 240 or a camera assembly 207, are disposed.

The memory may include, for example, volatile memory or nonvolatile memory.

The interface may include, for example, a high-definition multimedia interface (HDMI), a universal serial bus (USB) interface, an SD card interface, and/or an audio interface. The interface may electrically or physically connect, for example, the electronic device 200 to an external electronic device, and may include a USB connector, an SD card/an MMC connector, or an audio connector.

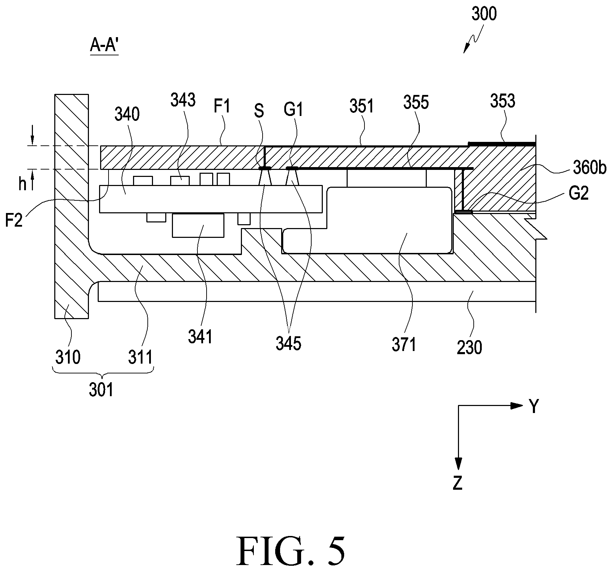

The second support member 260 may include, for example, an upper support member 260a and a lower support member 260b. In an embodiment, the upper support member 260a may be disposed to surround the printed circuit board 240 together with a portion of the first support member 211. A circuit device implemented in the form of an integrated circuit chip (e.g., a processor, a communication module, or memory) or various electrical/electronic components may be disposed on the printed circuit board 240, and in some embodiments, the printed circuit board 240 may be provided with an electromagnetic shield environment from the upper support member 260a. In an embodiment, the lower support member 260b may be utilized as a structure capable of disposing electric/electronic components such as a speaker module and an interface (e.g., a USB connector, an SD card/MMC connector, or an audio connector). In an embodiment, electrical/electronic components such as a speaker module and an interface (e.g., a USB connector, an SD card/MMC connector, or an audio connector) may be disposed on or connected to an additional printed circuit board (not illustrated) (e.g., the circuit board 340 in FIG. 5). In this case, the lower support member 260b may be disposed to wrap the additional printed circuit board together with the other portion of the first support member 211. An additional printed circuit board (not illustrated), or a speaker module or an interface disposed on the lower support member 260b may be disposed corresponding to the audio module 207 or the connector holes 108 and 109 of FIG. 1.

The battery 250 is a device for supplying power to at least one component of the electronic device 200 and may include, for example, a non-rechargeable primary battery, a rechargeable secondary battery, or a fuel cell. At least a portion of the battery 250 may be disposed on substantially the same plane as, for example, the printed circuit board 240. The battery 250 may be integrally disposed inside the electronic device 200, or may be disposed to be detachable from the electronic device 200.

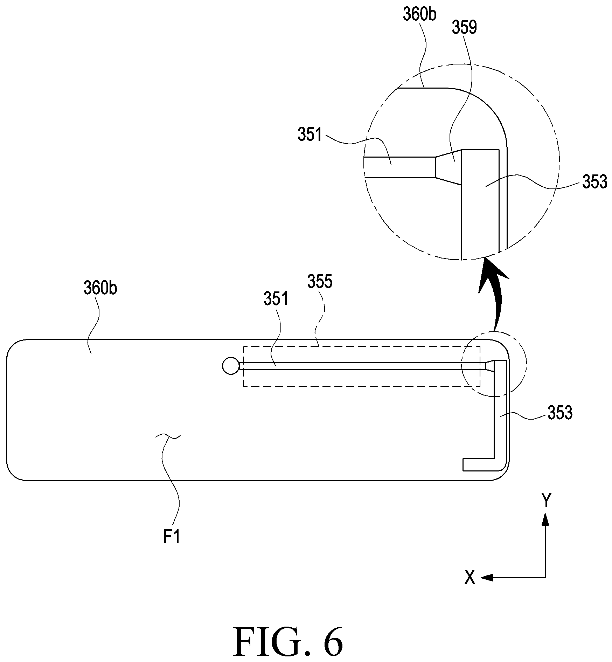

Although not illustrated, the antenna (e.g., the radiation conductor pattern 353 of FIGS. 5 and 6 to be described later) may include a conductive pattern implemented on the surface of the second support member 260 through, for example, printing, deposition, plating, and/or laser direct structuring. In an embodiment, the antenna may include a printed circuit pattern provided on the surface of a thin film, and the thin film-type antenna may be disposed between the rear surface plate 280 and the battery 250. The antenna may include, for example, a near-field communication (NFC) antenna, a wireless charging antenna, and/or a magnetic secure transmission (MST) antenna. The antenna may perform short-range communication with, for example, an external device, or may transmit/receive power required for charging to/from an external device in a wireless manner. In an embodiment, another antenna structure may be provided by a portion or a combination thereof of the side surface structure 210 and/or the first support member 211.

The camera assembly 207 may include at least one camera module. Inside the electronic device 200, the camera assembly 207 may receive at least some of light incident through optical holes or camera windows 212, 213, and 219. In an embodiment, the camera assembly 207 may be disposed on the first support member 211 at a position adjacent to the printed circuit board 240. In an embodiment, the camera module(s) of the camera assembly 207 may be generally aligned with one of the camera windows 212, 213, and 219, and may be at least partially wrapped by second support members 260 (e.g., the upper support member 260a).

It is noted that, in the following detailed description, the electronic devices 100 and 200 of the preceding embodiments may be referred to, and, for the components that may be easily understood through the preceding embodiments, the same reference numerals may be assigned or omitted, and/or a detailed description thereof may also be omitted.

FIG. 5 is a view illustrating an electronic device 300 (e.g., the electronic device 100 or 200 in FIGS. 1 to 4) according to an embodiment of the disclosure, cut along line A-A' in FIG. 2.

Referring to FIG. 5, the electronic device 300 (e.g., the electronic device 100 or 200 in FIGS. 1 to 4) may include a housing 301 (e.g., the housing 201 in FIG. 3 or FIG. 4), a circuit board 340 (e.g., the printed circuit board 240 in FIG. 3 or FIG. 4), a first plate 360b (e.g., one of the second support members 260 in FIG. 3 or FIG. 4), transmission line (transmission line) 351, and/or a ground conductor 355. In an embodiment, the transmission line 351 and/or the ground conductor 355 may be disposed, more preferably directly disposed on different surfaces, (e.g., the first surface F1 and the second surface F2), respectively, in the opposite surfaces of the first plate 360b. In an embodiment, the transmission line 351 may be disposed to at least partially overlap the ground conductor 355 when viewed from one of the opposite surfaces of the first plate 360b. In an embodiment, the transmission line 351 may be disposed to overlap between 50% and 100% of the ground conductor 355 when viewed from one of the opposite surfaces of the first plate 360b, more preferably between 80% to 100%, more preferably between 90% and 100%.

According to an embodiment, the housing 301 may include a frame-shaped side surface structure 310 (e.g., the side surface structure 210 in FIG. 3 or FIG. 4) and a second plate 311. The second plate 311 may be, for example, at least a portion of the first support member 211 in FIG. 3 or FIG. 4, and may have a flat plate shape extending from the side surface structure 310. In some embodiments, the second plate 311 may be disposed to at least partially face the first plate 360b with the circuit board 340 interposed therebetween, and the side surface structure 310 and/or the second plate 311 may at least partially include an electrically conductive material, such as a metal material. In an embodiment, the housing 301 may suppress electromagnetic interference of electrical/electronic components in the inner space of the electronic device 300, and may provide a reference potential by being electrically connected to a ground plane of the circuit board 340 (or the printed circuit board 240 in FIG. 4).

According to an embodiment, the circuit board 340 may be accommodated inside the housing 301, and may include integrated circuit chip(s) 341 or 343 on which a circuit such as a processor or a communication module is mounted. In some embodiments, a circuit board 340 may be further disposed in addition to the printed circuit board 240 in FIG. 3 or FIG. 4, and may be implemented in various ways depending on the internal structure of an electronic device to be actually manufactured. According to an embodiment, the printed circuit board 240 in FIG. 3 or FIG. 4 may be provided as a main circuit board, and the circuit board 340 may be provided as an auxiliary circuit board. However, the present disclosure is not limited thereto, and in an embodiment, the printed circuit board 240 in FIG. 3 or FIG. 4 may be provided as an auxiliary circuit board, and the circuit board 340 may be provided as a main circuit board.

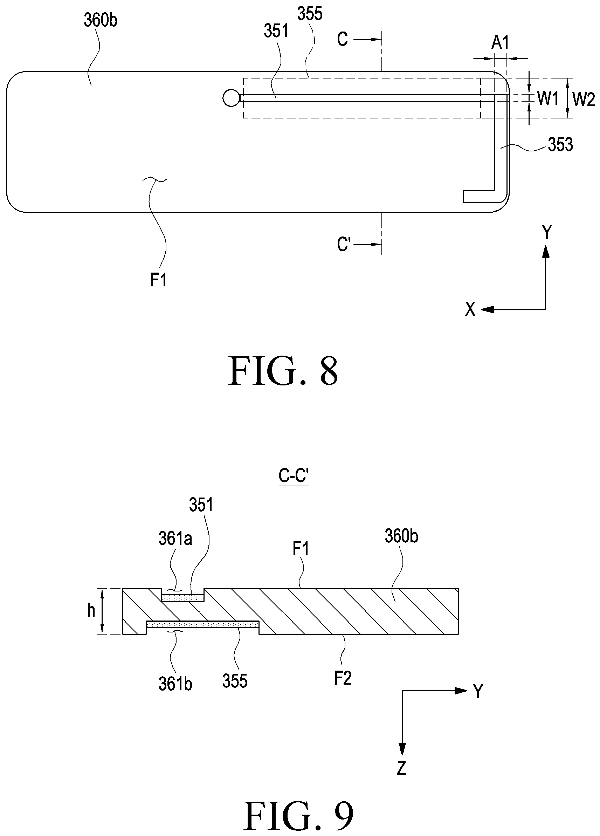

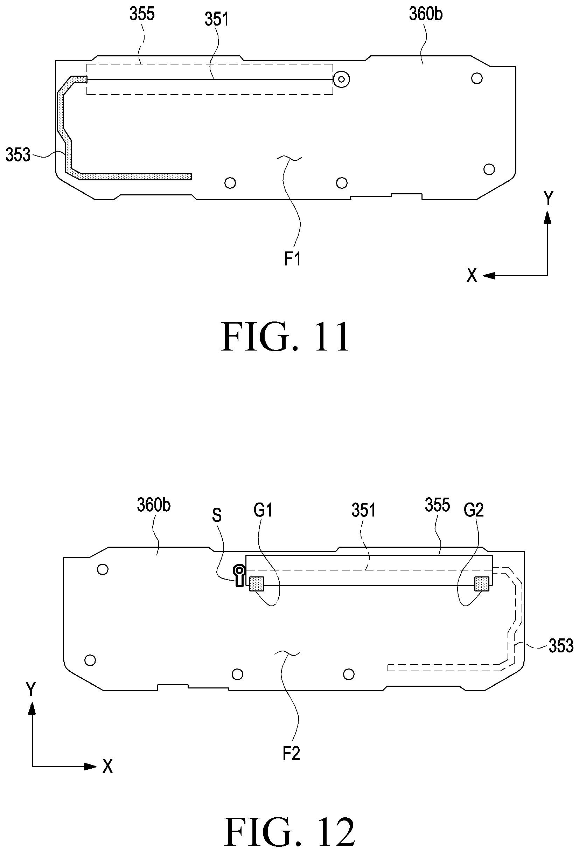

According to an embodiment, the first plate 360b may be one of the second support members 260 in FIG. 3 or FIG. 4. For example, as will be described with reference to FIGS. 11 to 16, the first plate 360b may be implemented with at least one of the upper support member 260a or the lower support member 260b in FIG. 4. In an embodiment, the first plate 360b may have a shape and size substantially corresponding to that of the second plate 311 (e.g., the first support member 211 in FIG. 3 or FIG. 4). According to an embodiment, the first plate 360b may include a non-conductive material, a dielectric material, and/or a non-metal (e.g., polymer) material, and may have a predetermined thickness (or height) h. In an embodiment, the line width (e.g., the first line width W1 in FIG. 8) of the transmission line 351 may be determined depending on the permittivity or thickness h of the first plate 360b.

According to an embodiment, the transmission line 351 is disposed, more preferably directly disposed on one surface (e.g., the first surface F1 substantially parallel to the XY plane and facing the -Z direction) of the first plate 360b, and may include a microstrip line having a predetermined line width (e.g., the first line width W1 in FIG. 8). For example, the transmission line 351 may include a conductive pattern provided through printing, plating, deposition, and/or laser direct structuring. In an embodiment, the transmission line 351 may extend along a predetermined trajectory, and the trajectory of the transmission line 351 may vary depending on specifications or an internal structure of the electronic device 300 to be actually manufactured. In an embodiment, the transmission line 351 may transmit transmitted and/or received wireless communication signals via a radiation conductor pattern 353 to be described later. In some embodiments, at least a portion of the side surface structure 310 may function as an antenna for transmitting and/or receiving wireless signals. In this case, the transmission line 351 may transmit the transmitted and/or received wireless communication signals via the side surface structure 310.

According to an embodiment, the ground conductor 355 may disposed, more preferably directly disposed on a surface of the first plate 360b (e.g., the second side F2 substantially parallel to the XY plane and facing the +Z direction) that is different from that for the transmission line 351. In an embodiment, the ground conductor 355 may include a conductor pattern having a line width (e.g., the second line width W2 in FIG. 8) which is at least partially different from that of the transmission line 351. For example, the ground conductor 355 may include a conductive pattern provided through printing, plating, deposition, and/or laser direct structuring. For example, the transmission line 351 and/or the ground conductor 355 may include a laser direct structured pattern. The ground conductor 355 may at least partially extend in parallel to the transmission line 351. In an embodiment, the transmission line 351 and the ground conductor 355 may be disposed on different surfaces of the first plate 360b to at least partially overlap each other when viewed from one surface of the first plate 360b (e.g., when viewed in the Z-axis direction).

According to an embodiment, the electronic device 300 may further include a radiation conductor pattern 353 disposed, more preferably directly disposed on at least one surface of the first plate 360b (e.g., the second surface F2 facing the +Z direction and/or the first surface F1 facing the -Z direction). The radiation conductor pattern 353 is a conductive pattern provided through, for example, printing, plating, deposition, and/or laser direct structuring, and may function as an antenna. According to an embodiment, the transmission line 351 may transmit wireless communication signals transmitted and/or received through the radiation conductor pattern 353 between the circuit board 340 and the radiation conductor pattern 353. In an embodiment, a portion of one conductor pattern (e.g., a laser direct structured pattern) may be provided as the transmission line 351, and another portion may be provided as the radiation conductor pattern 353. For example, in the ground conductor 355 of one conductor pattern located on one surface of the first plate 360b, the portion disposed to overlap the ground conductor 355 may function as a transmission line 351, and in the one ground conductor, the portion disposed not to overlap the ground conductor 355 may function as the radiation conductor pattern 353 (e.g., an antenna). In an embodiment, regardless of whether the transmission line 351 and the radiation conductor pattern 353 overlap the ground conductor 355, the transmission line 351 and the radiation conductor pattern 353 may be distinguished from each other by having different widths while being provided in one conductor pattern.

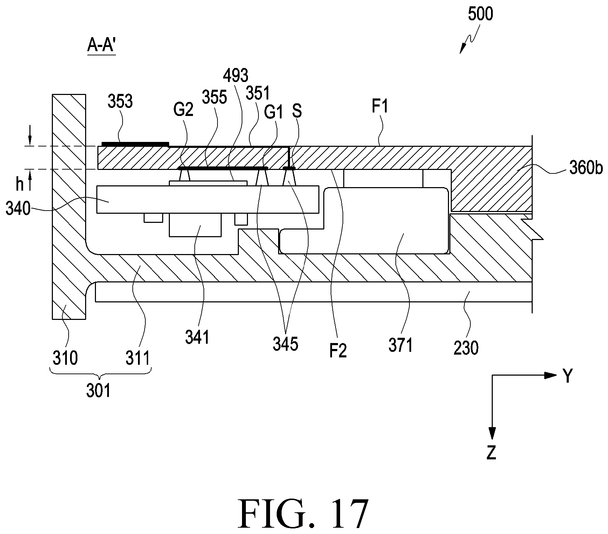

According to an embodiment, when a wireless communication signal is transmitted via the transmission line 351, the ground conductor 355 may provide a reference potential for the transmission line 351 or provide an electromagnetic shield environment. For example, the transmission line 351 may be provided with an environment in which electromagnetic interference is suppressed in transmitting a wireless communication signal. As will be described with reference to FIG. 17, when the transmission line 351 is arranged to overlap the circuit board 340 in the Z-axis direction, the ground conductor 355 is at least partially arranged between the transmission line 351 and the circuit board 340 to function as an electromagnetic shield structure between the transmission line 351 and/or the circuit board 340. However, the embodiment(s) of the disclosure is(are) not limited to this arrangement relationship, and the arrangements of the transmission line 351, the ground conductor 355, and/or the circuit board 340 may be variously changed.

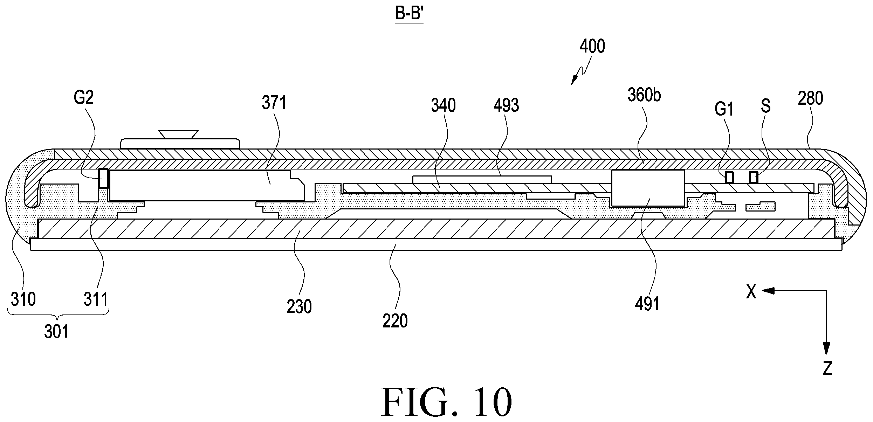

According to an embodiment, the transmission line 351, the ground conductor 355, and/or the radiation conductor pattern 353 may be provided on a surface of an internal structure of the electronic device 300 (e.g., one surface or the other surface of the first plate 360b) through printing, deposition, plating, and/or laser direct structuring. In an embodiment, even when electrical components such as the speaker 371, a connector (e.g., the connector 491 in FIG. 10), a camera (e.g., the camera assembly 207 in FIG. 4), and/or an electromagnetic shield member (e.g., the electromagnetic shield member 493 exemplified as a shield can in FIG. 10) are disposed in an area between the circuit board 340 and the radiation conductor pattern 353 inside the housing 301, the transmission line 351 or the ground conductor 355 may stably transmit a wireless communication signal between the circuit board 340 and the radiation conductor pattern 353. In the structure in which other electrical components are arranged in the area between the circuit board 340 and the radiation conductor pattern 353, the transmission line 351 or the ground conductor 355 may be arranged to bypass the electrical component(s) while at least partially overlapping the electrical component(s) in the Z-axis direction. For example, since it is possible to implement the transmission line 351 reaching an antenna (e.g., the radiation conductor pattern 353) or the side surface structure 310 (e.g., the side surface structure 210 of FIG. 3 or FIG. 4) functioning as an antenna without substantial change in the internal structure or shape of the electronic device 300, the design or arrangement of the antenna may be facilitated. In an embodiment, the transmission line 351 or the ground conductor 355 may be disposed to overlap between 50% and 100% of the electrical component(s) in the Z-axis direction, more preferably at least 90%.

It is noted that, although, in a disclosed embodiment, it is described that "the transmission line 351, the ground conductor 355, and/or the radiation conductor pattern 353 are disposed on the surface of the internal structure of the electronic device 300 (e.g., one surface or the other surface of the first plate 360b)," it is noted that the embodiment(s) of the disclosure is(are) not limited thereto. For example, after the transmission line 351, the ground conductor 355, and/or the radiation conductor pattern 353 are arranged, an additional injection-molded product, a synthetic resin sheet, a film or a coating layer is disposed on the surface of the first plate 360b to cover the transmission line 351, the ground conductor 355, and/or the radiation conductor pattern 353. In an embodiment, even if covered by an additional layer, among the transmission line 351, the ground conductor 355, and/or the radiation conductor pattern 353, at least the radiation conductor pattern 353 may provide an environment capable of radiating a wireless signal to the first plate 360b and/or the outer space of the electronic device 300.

According to an embodiment, the electronic device 300 and/or the first plate 360b may include at least one signal terminal (e.g., the signal terminal S), and at least one ground terminal (e.g., the first ground terminal G1 and the second ground terminal G2). The signal terminal S and/or the ground terminal(s) G1 and G2 may be located on one (e.g., the second surface F2) of the opposite surfaces of the first plate 360b that faces the circuit board 340. In an embodiment, the signal terminal S may be electrically connected, more preferably directly electrically connected to the transmission line 351, and may be electrically connected to the circuit board 340 via a contact member 345 such as a C clip. The first ground terminal G1 may be electrically connected, more preferably directly electrically connected to the ground conductor 355, and may be electrically connected to the circuit board 340 via the contact member 345. For example, a plurality of contact members 345 may be disposed, more preferably directly disposed on the circuit board 340, and when the circuit board 340 and the first plate 360b are accommodated in the housing 201, the contact members 345 may each come into contact with one of the signal terminal S and the first ground terminal G1. As described above, the transmission line 351 and/or the signal terminal S may be electrically connected to the circuit board 340 (e.g., a communication module) via one of the contact members 345, and the ground conductor 355 and/or the first ground terminal G1 may be electrically connected to the circuit board 340 (e.g., a ground plane) via another one of the contact members 345.

In an embodiment, the second ground terminal G2 may be electrically connected, more preferably directly electrically connected to the ground conductor 355, and may electrically connect the ground conductor 355 to another structure within the housing 201. For example, when the second plate 311 or the first support member 211 of FIG. 4 includes an electrically conductive material, the ground conductor 355 may be electrically connected to the second plate 311. Although not illustrated, when the outer surface of an electrical component such as the speaker 371 includes an electrically conductive material, an additional second ground terminal G2 may be provided to electrically connect the ground conductor 355 to the electrical component. In an embodiment, in electrically connecting the second ground terminal G2 to the second plate 311 or the electrical component, the electronic device 300 may further include an additional contact member(s) (not illustrated).

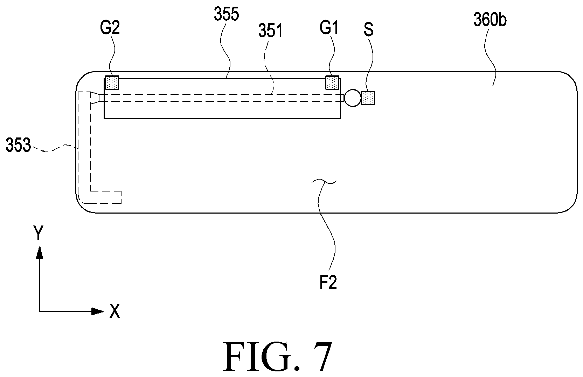

FIG. 6 is a view illustrating a first surface F1 of a first plate 360b (e.g., the second support member 260 in of FIG. 4 or the first plate 360b in FIG. 5) of an electronic device (e.g., the electronic device 100, 200, or 300 in FIGS. 1 to 5) according to an embodiment of the disclosure. FIG. 7 is a view illustrating a second surface F2 of the first plate 360b of the electronic device 300 according to an embodiment of the disclosure. FIG. 8 is a view illustrating the first surface F1 of the first plate 360b of the electronic device 300 according to an embodiment of the disclosure. FIG. 9 is a view illustrating the first plate 360b of the electronic device 300 according to an embodiment of the disclosure, cut along line C-C' in FIG. 8.

For example, FIG. 6 may exemplify a first surface F1 of the opposite surfaces of the first plate 360b that faces the -Z direction, and FIG. 7 may exemplify a second surface F2 of the opposite surfaces of the first plate 360b that faces the +Z direction. The illustrated embodiment exemplifies the configuration in which the transmission line 351 and the ground conductor 355 are respectively arranged on different surfaces of the first plate 360b, and the transmission line 351 and the radiation conductor pattern 355 are arranged on the same surface (e.g., the first surface F1) of the first plate 360b, but it is noted that the embodiment(s) of the disclosure is(are) not limited thereto. In an embodiment, the transmission line 351 may be arranged on the second surface F2 of the opposite sides of the first plate 360b that faces the +Z direction, and the ground conductor 355 may be disposed on the first surface F1 of the opposite surfaces of the first plate 360b that faces the -Z direction. In an embodiment, the radiation conductor pattern 353 may be arranged on the same surface as the ground conductor 355 and arranged on a surface different from that for the transmission line 351. For example, the arrangement of the transmission line 351, the ground conductor 355, and/or the radiation conductor pattern 353 may be appropriately selected in consideration of specifications or antenna radiation performance of the electronic device 300 to be actually manufactured. In an embodiment, the arrangement of the signal terminal S or the ground terminal(s) G1 and G2 may vary depending on the shapes and arrangement of the ground conductor 355 and/or the radiation conductor pattern 353. For example, considering the relative position of the circuit board 340 with respect to the ground conductor 355, and the shapes of the second plate 311 or another electrical component and the ground conductor 355, the position(s) of the ground terminal(s) G1 and G2 may be appropriately selected.

Further referring to FIGS. 6 to 9, the radiation conductor pattern 353 may be manufactured in an appropriate shape at an appropriate location in consideration of the internal structure or radiation performance of the electronic device 300. When the radiation conductor pattern 353 is disposed at a position spaced apart from the signal terminal S, for example, by a predetermined distance from the position where the circuit board 340 is disposed, the transmission line 351 may be provided along a trajectory leading to the radiation conductor pattern 353 from the signal terminal S. In an embodiment, the ground conductor 355 may be disposed, more preferably directly disposed on a surface of the first plate 360b that is different from that for the transmission line 351 and may be arranged to be parallel to the transmission line 351 while at least partially overlapping the transmission line 351.

According to an embodiment, the first ground terminal G1 may be disposed adjacent to one end (e.g., the signal terminal S) of the transmission line 351. Here, from the description "the first ground terminal G1 is disposed adjacent to the signal terminal S," it may be understood that the distance (or interval) between the first ground terminal G1 and the signal terminal S is smaller than the distance between the first ground terminal G1 and the radiation conductor pattern 353. In an embodiment, when the second ground terminal G2 is disposed, the second ground terminal G2 may be disposed adjacent to the other end of the transmission line 351 or the radiation conductor pattern 353. Here, from the description "the second ground terminal G2 is adjacent to the radiation conductor pattern 353," it may be understood that the distance between the second ground terminal G2 and the radiation conductor pattern 353 is smaller than the distance between the second ground terminal G2 and the signal terminals S. According to an embodiment, as the distance between the first ground terminal G1 and the second ground terminal G2 on the ground conductor 355 increases, the reference potential or the electromagnetic shield structure may be stabilized. However, the embodiment(s) of the disclosure is(are) not limited thereto, and the second ground terminal G2 may be omitted or disposed at a position that is different from the illustrated position. In one embodiment, when the transmission line 351 or the ground conductor 355 overlaps an electrical component such as a speaker 371 or a connector (e.g., the connector 491 in FIG. 10) in the Z-axis direction, an additional second ground terminal G2 may be provided to electrically connect the electrical component and the ground conductor 355.

According to an embodiment, the electronic device 300 and/or the first plate 360b may further include wiring recess(es) 361a and 361b provided on at least one of the opposite surfaces of the first plate 360b. The wiring recesses 361a and 361b may be, for example, areas or spaces recessed from the surface of the first plate 360b. In an embodiment, when the wiring recesses 361a and 361b are provided on one of the opposite surfaces of the first plate 360b, one of the transmission line 351, the ground conductor 355, and/or the radiation conductor pattern 353 may be at least partially provided in the wiring recesses 361a and 361b. The conductive pattern(s) constituting the transmission line 351, the ground conductor 355, and/or the radiation conductor pattern 353 may be at least partially disposed in the wiring recesses 361a and 361b. In an embodiment, when a first wiring recess 361a may be provided in a first one F1 of opposite surfaces of the first plate 360b and a second wiring recess 361a may be provided in a second one F2 of the opposite surfaces of the first plate 360b, each of the transmission line 351 (and/or the radiation conductor pattern 353) and the ground conductor 355 may be disposed in one the first wiring recess 361a or the second wiring recess 361b. By being accommodated into one of the wiring recesses 361a and 361b, the transmission line 351, the ground conductor 355, and/or the radiation conductor pattern 353 may not substantially protrude from the surface of the first plate 360b. For example, the transmission line 351, the ground conductor 355, and/or the radiation conductor pattern 353 may be protected from damage caused by interference with another structure outside the first plate 360b.

According to an embodiment, the transmission line 351 is a conductive pattern extending in one direction (e.g., the X-axis direction) and may have a first line width W1. The ground conductor 355 is another conductive pattern extending substantially in parallel to the transmission line 351 and may at least partially have a second line width W2 different from the first line width W1. In an embodiment, the ground conductor 355 may have the second line width W2 substantially greater than the first line width W1. In an embodiment, the line width (e.g., the first line width W1) of the transmission line 351 may be determined by the thickness h or permittivity of the first plate 360b. For example, when the thickness h of the first plate 360b having a permittivity of about 3 to about 5 is about 0.5 mm, the first line width W1 of the transmission line 351 may be about 0.86 mm to about 1.24 mm. In an embodiment, when the thickness h of the first plate 360b having a permittivity of about 3 to about 5 is about 0.8 mm, the first line width W1 of the transmission line 351 may be about 1.34 mm to about 2.0 mm. The material (e.g., the permittivity) and thickness h of the first plate 360b and/or the first line width W1 of the transmission line 351 may be designed variously depending on the specifications of the electronic device 300 to be actually manufactured.

According to an embodiment, the electronic device 300 may further include a radiation conductor pattern 353. In an embodiment, the radiation conductor pattern 353 may transmit, through the transmission line 351, a wireless communication signal received to the circuit board 340, or may receive a wireless communication signal to be transmitted through the transmission line 351. For example, on the first plate 360b, the radiation conductor pattern 353 may be disposed on the same surface as the transmission line 351 or disposed on a surface different from that for the transmission line 351, and may be provided with a power supply signal to transmit and/or receive a wireless signal. In this embodiment, the configuration of the radiation conductor pattern 353 disposed on the first plate 360b is exemplified, but it is noted that the embodiment(s) of the disclosure is(are) not limited thereto. For example, a portion of the housing 201 of FIG. 4 (e.g., the side surface structure 210) or a portion of the housing 301 of FIG. 5 may function as a radiation conductor. In this case, on the first plate 360b, the radiation conductor pattern 353 may be omitted, and a portion of the housing 201 or 301 may be electrically connected to the circuit board 340 via the transmission line 351. In an embodiment, regardless of whether a portion of the housing 201 or 301 is implemented as a radiation conductor, the radiation conductor pattern 353 may be provided on the first plate 360b to function as an antenna separately from a portion of the housing 201 or 301.

According to an embodiment, the radiation conductor pattern 353 may extend along a predetermined trajectory, and may be a conductive pattern substantially extending from the transmission line 351 when provided on the first plate 360b. For example, when provided on the same surface of the first plate 360b, the transmission line 351 and the radiation conductor pattern 353 may be different portions in substantially one conductive pattern. In an embodiment, in the structure in which the transmission line 351 and the radiation conductor pattern 353 are provided as one conductive pattern, the transmission line 351 may be disposed to overlap the ground conductor 355 and the radiation conductor pattern 353 may be provided not to overlap the ground conductor 355 when viewed from one of the opposite surfaces of the first plate 360b. For example, when viewed in the Z-axis direction, the conductive pattern of the portion overlapping the ground conductor 355 may function as the transmission line 351, and the conductive pattern of the portion, which does not overlap the ground conductor 355, may function as the radiation conductor pattern 353.

According to an embodiment, the transmission line 351 and the radiation conductor pattern 353 may have different line widths. For example, the radiation conductor pattern 353 may have a third line width A1 different from the first line width W1. In an embodiment, when the first line width W1 and the third line width A1 are different from each other or depending on the relative alignment state of the transmission line 351 and the radiation conductor pattern 353, the electronic device 300 may further include a matching line 359 disposed, more preferably directly disposed between the transmission line 351 and the radiation conductor pattern 353. For example, the matching line 359 may have the first line width W1 at a point connected to the transmission line 351, and may have a line width that gradually increases or decreases in a direction away from the transmission line 351. For example, the matching line 359 may have a shape capable of suppressing connection loss or reflection loss at the connection point between the transmission line 351 and the radiation conductor pattern 353. In an embodiment, in the structure in which the transmission line 351 and the radiation conductor pattern 353 are aligned in a direction in which the transmission line 351 and the radiation conductor pattern 353 cross each other, the matching line 359 may have a line width that may gradually increases in a direction away from one end of the transmission line 351. The line width of the matching line 359 at the point where the matching line 359 is in contact with the radiation conductor pattern 355 may be greater than the line width at the point where the matching line 359 is in contact with the transmission line 351.

FIG. 10 illustrates an electronic device 400 (e.g., the electronic device 100, 200, or 300 in FIGS. 1 to 5) according to an embodiment of the disclosure, cut along line B-B' in FIG. 2.

FIG. 10 exemplifies the configuration in which the signal terminal S and the ground terminal(s) G1 and G2(s) arranged on a straight line in the X-axis direction, but the embodiment(s) are not limited thereto in terms of the positions and the shapes of the signal terminal S and the ground terminal(s) G1 and G2. For example, the signal terminal S and the ground terminal(s) G1 and G2 of the actually manufactured electronic device 400 may be disposed at positions different from those in the cross section illustrated in FIG. 10. In an embodiment, when the electronic device 400 is cut away at a location different from that illustrated in FIG. 2 or FIG. 10, at least one of the signal terminal S and the ground terminal(s) G1 and G2 may not be visible in the cross-sectional view or another terminal not illustrated in FIG. 10 may be visible. According to an embodiment, although omitted in FIG. 10, when viewed at the cross-section of the actual electronic device 400, another internal component (e.g., the camera assembly 207 or the battery 250 in FIG. 4) may be visible through a gap between the circuit board 340 and the first plate 360b.

Further referring to FIG. 10, the electronic device 400 may include electrical components accommodated in a housing 301 (e.g., the housing 201 in FIG. 3 or FIG. 4), and a first plate 360b (e.g., the upper support member 260a or the lower support member 260b in FIG. 4) may be disposed to face a second plate 311 (e.g., the first support member 211 in FIG. 3 or FIG. 4) with at least a portion of the circuit board 340 interposed therebetween. The electrical components may include, for example, a connector 491 and/or an electromagnetic shield member 493 disposed on the circuit board 340, and a speaker 371 and/or a camera (e.g., the camera assembly 207 in FIG. 4) disposed separately from the circuit board 340. The connector 491 may be at least partially accommodated in, for example, a notch or opening provided in one side edge of the circuit board 340, and the electromagnetic shield member 493 may be disposed on one surface of the circuit board 340 in the state of wrapping at least one of other electrical/electronic components (e.g., the integrated circuit chips 341 and 343 in FIG. 5). For example, the electromagnetic shield member 493 may be electrically connected to the ground plane of the circuit board 340 and may provide an electromagnetic shield environment to at least one electrical/electronic component. In an embodiment, electrical components such as the speaker 371 and/or the camera may be spaced apart from the circuit board 340 in the X-axis direction or the Y-axis direction, and may be at least partially disposed on the same plane as the circuit board 340 inside the housing 301 (e.g., in the Z-axis direction).

According to an embodiment, the ground conductor (e.g., the ground conductor 355 in FIGS. 5 to 9) may be disposed on one surface (e.g., the inner surface facing the +Z direction or the second surface F2 in FIG. 5) of the first plate 360b (e.g., the second support member 260 in FIG. 3 or FIG. 4) to face the circuit board 340 or the second plate 311 (e.g., the first support member 211 in FIG. 4), and the first ground terminal G1 and the second ground terminal G2 may be electrically connected to the circuit board 340 (e.g., the ground plane of the circuit board 340) or a component that operates as a ground, such as the second plate 311, at the opposite side edges of the ground conductor 355. In an embodiment, when viewed in the Z-axis direction, the ground conductor 355 may at least partially overlap electrical components (e.g., the speaker 371, the connector 491, and/or the electromagnetic shield member 493). Although not illustrated, an additional second ground terminal (e.g., the second ground terminal G2 in FIG. 17) may be disposed on one surface of the first plate 360b. An additional second ground terminal(s) may electrically connect, for example, the speaker 371, the connector 491, and/or the electromagnetic shield member 493 to the ground conductor 355.

According to an embodiment, the transmission line (e.g., the transmission line 351 in FIGS. 5 to 9) may be disposed on another surface (e.g., the outer surface facing the -Z axis or the first surface F1 in FIG. 5) of the first plate 360b (e.g., the lower support member 260b in FIG. 3 or FIG. 4), and may at least partially overlap the ground conductor 355 in the Z-axis direction. For example, the transmission line 351 may extend on the outer surface (e.g., the surface facing the -Z direction) of the first plate 360b in the X-axis direction from the position where the signal terminal S is disposed, and a portion extending to the +X direction from the position where the first ground terminal G1 is disposed may substantially overlap the ground conductor 355. The transmission line 351 may be electrically connected to the circuit board 340 (e.g., a communication circuit) via the signal terminal S, and may be electrically connected, more preferably directly electrically connected to the radiation conductor pattern 353 disposed on at least one of the opposite surfaces of the first plate 360b and/or a portion of the housing 301 (e.g., the side surface structure 310) to transmit a wireless communication signal. In an embodiment, at least a portion of the ground conductor 355 may be disposed between the circuit board 340 and the transmission line 351 and may provide an electromagnetic shield function between the transmission line 351 and the circuit board 340 when a wireless communication signal is provided via the transmission line 351.

FIG. 11 is a view illustrating a first surface F1 of the first plate (e.g., the lower support member 260b in FIG. 4 or the first plate 360b in FIG. 5) of an electronic device (e.g., the electronic device 100, 200, or 300 in FIGS. 1 to 5) according to an embodiment of the disclosure. FIG. 12 is a view illustrating a second surface F2 of the first plate 360b of the electronic device 300 according to an embodiment of the disclosure.

FIGS. 11 and 12 exemplify a configuration in which, of the second support member 260 of FIG. 4, the lower support member 260b is provided as the first plate 360b, and the transmission line 351 is provided on the outer surface of the first plate 360b (e.g., the first surface F1 in FIG. 5). Referring to FIGS. 11 and 12, in an embodiment, one conductive pattern may provide the transmission line 351 and the radiation conductor pattern 353 on the outer surface of the first plate 360b. In an embodiment, regardless of whether the radiation conductor pattern 353 overlaps the ground conductor 355 in the Z-axis direction, the radiation conductor pattern 353 may have a line width greater than that of the transmission line 351. In an embodiment, the ground conductor 355 disposed in the area corresponding to the transmission line 351, the signal terminal S electrically connected, more preferably directly electrically connected to the transmission line 351, and/or the ground terminals G1 and G2 electrically connected, more preferably directly electrically connected to the ground conductor 355 may be disposed on the inner surface (e.g., the second surface F2 in FIG. 5) of the first plate 360b. The "inner surface of the first plate 360b" may be referred to as, for example, the second surface F2, and may be understood as a surface facing the circuit board (e.g., the circuit board 340 in FIG. 10) or the second plate 311 (e.g., the first support member 211 in FIG. 10) in the state of being disposed in the housing (e.g., the housing 201 or 301 in FIG. 4 or FIG. 10). The signal terminal S may be disposed to correspond to one end of the transmission line 351. On the outer surface of the first plate 360b, the radiation conductor pattern 353 may extend from the other end of the transmission line 351. Of the ground terminals G1 and G2, a first ground terminal G1 may be disposed on the ground conductor 355 at a position adjacent to the signal terminal S, and a second ground terminal G2 may be disposed on the ground conductor 355 at a position adjacent to the radiation conductor pattern 353.

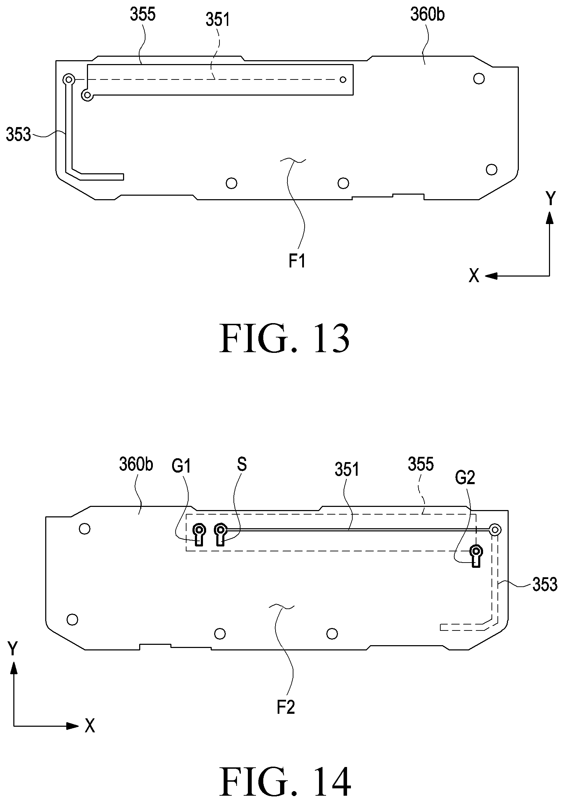

FIG. 13 is a view illustrating a first surface F1 of the first plate (e.g., the lower support member 260b in FIG. 4 or the first plate 360b in FIG. 5) of an electronic device (e.g., the electronic device 100, 200, 300, or 400 in FIGS. 1 to 5 or FIG. 10) according to an embodiment of the disclosure. FIG. 14 is a view illustrating a second surface F2 of the first plate 360b of the electronic device 300 according to an embodiment of the disclosure.

FIGS. 13 and 14 exemplify a configuration in which the lower support member 260b of the second support member 260 of FIG. 4 is provided as the first plate 360b, and the transmission line 351 is provided on the inner surface of the first plate 360b. Referring to FIGS. 13 and 14, on the outer surface of the first plate 360b (e.g., the first surface F1 in FIG. 5), the radiation conductor pattern 353 and the ground conductor 355 may include conductor pattern(s) disposed in areas that are independent from each other. The transmission line 351 may be disposed on the inner surface (e.g., the second surface F2 in FIG. 5) of the first plate 360b, and may be disposed to at least partially overlap the ground conductor 355 in the Z-axis direction. The electronic device 300 and/or the first plate 360b may include ground terminals G1 and G2 disposed on the inner surface of the first plate 360b to correspond to the opposite side edges of the ground conductor 355, and a signal terminal S disposed at one end of the transmission line 351.

Although not directly described, an embodiment in which the transmission line 351 and the radiation conductor pattern 353 are disposed on the inner surface (e.g., the second surface F2) of the first plate 360b, and the ground conductor 355 is disposed on the outer surface (e.g., the first surface F1) of the first plate 360b may be implemented. For example, the embodiment(s) of the disclosure may include a structure in which the transmission line 351 and the ground conductor 355 are disposed respectively on different surfaces of the first plate 360b, and it is noted that the transmission line 351, the ground conductor 355, and/or the radiation conductor pattern 353 are not limited to the aforementioned embodiment(s).

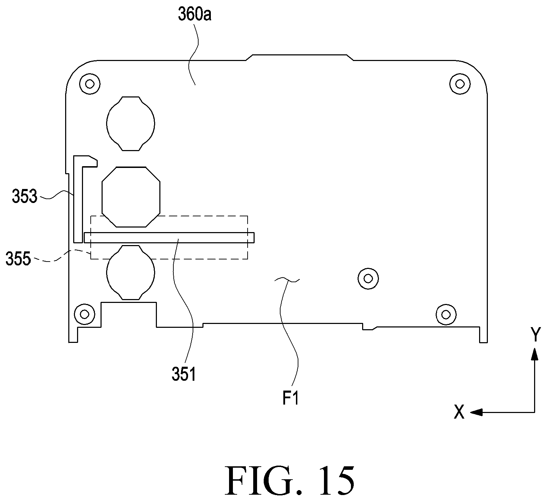

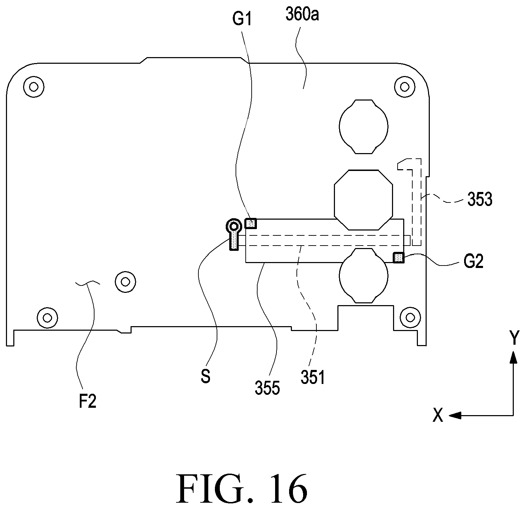

FIG. 15 is a view illustrating a first surface F1 of a first plate (e.g., the upper support member 260a in FIG. 4 or the first plate 360b in FIG. 5) of an electronic device (e.g., the electronic device 100, 200, 300, or 400 in FIGS. 1 to 5 or FIG. 10) according to an embodiment of the disclosure. FIG. 16 is a view illustrating a second surface F2 of the first plate 360a of the electronic device 300 according to an embodiment of the disclosure.

FIGS. 15 and 16 exemplify a configuration in which, of the second support members 260 of FIG. 4, the upper support member 260a is provided as the first plate 360a, and the transmission line 351 is provided on the outer surface of the first plate 360a (e.g., the first surface F1 in FIG. 5). Referring to FIGS. 15 and 16, one conductive pattern may provide the transmission line 351 and the radiation conductor pattern 353 on the outer surface of the first plate 360a. Regardless of whether the radiation conductor pattern 353 overlaps the ground conductor 355 in the Z-axis direction, the radiation conductor pattern 353 may have a line width different from that of the transmission line 351. Although there is a difference in that the upper support member 260a is used as the first plate 360a, the embodiment of FIGS. 15 and 16 may be easily understood based on the embodiment of FIGS. 11 and 12, so a detailed description thereof will be omitted.

FIG. 17 illustrates an electronic device 500 (e.g., the electronic device 100, 200, 300, or 400 in FIGS. 1 to 5 or FIG. 10) according to an embodiment of the disclosure, cut along line A-A' in FIG. 2.

Referring to FIG. 17, the ground conductor 355 and/or the transmission line 351 may be disposed to substantially overlap the circuit board 340 in the Z-axis direction. According to an embodiment, the ground conductor 355 and/or the transmission line 351 may be disposed to at least partially overlap electrical components (e.g., the speaker 371 and/or the electromagnetic shield member 493) inside the electronic device 500. In some embodiments, in the electronic device 500 with the structure in which the ground conductor 355 is disposed close to an electrical component, the ground conductor 355 may be electrically connected to an electrical component via the second ground terminal G2 or an additional third ground terminal. For example, an electrical component such as the electromagnetic shield member 493 may be electrically connected to the ground conductor 355 via the second ground terminal G2 or the additional third ground terminal to function as a ground plane that at least partially provides reference potential. In an embodiment, when the ground conductor 355 and/or the transmission line 351 are disposed to substantially overlap the circuit board 340 in the Z-axis direction, the ground conductor 355 may be at least partially disposed between the transmission line 351 and the circuit board 340.

As described above, according to an embodiment of the disclosure, an electronic device (e.g., the electronic device 100, 200, 300, 400, or 500 in FIGS. 1 to 5, FIG. 10, and/or FIG. 17) includes a housing (e.g., the housing 201 or 301 in FIGS. 1 to 5, FIG. 10 and/or FIG. 17), a circuit board (e.g., the circuit board 240 or 340 in FIGS. 3 to 5, FIG. 10 and/or FIG. 17) accommodated inside the housing, a first plate (e.g., the second support member 260 in FIG. 4 or the first plate 360a or 360b in FIGS. 5 to 17) disposed inside the housing to at least partially face the circuit board, a transmission line (e.g., the transmission line 351 in FIGS. 5 to 9 and/or FIG. 17) disposed on a first one of opposite surfaces of the first plate and electrically connected to the circuit board, a ground conductor (e.g., the ground conductor 355 in FIGS. 5 to 9 and/or FIG. 17) disposed on a second one of the opposite surfaces of the first plate and electrically connected to the circuit board, and a radiation conductor pattern (e.g., the radiation conductor pattern 353 in FIGS. 5 to 9 and/or FIG. 17) disposed on one of the first surface (e.g., the first surface F1 in FIG. 5) and the second surface (e.g., the second surface F2 in FIG. 5) and electrically connected to one end of the transmission line. The transmission line is disposed to at least partially overlap the ground conductor when viewed from one of the first surface and second surface, and the transmission line is configured to transmit a wireless communication signal transmitted or received via the radiation conductor pattern.

According to one embodiment, the radiation conductor pattern may be disposed not to overlap the ground conductor when viewed from one of the first surface and second surface. In this arrangement, the radiation conductor pattern may function as an antenna.

According to one embodiment, the above-described electronic device may further include a signal terminal (e.g., the signal terminal S in FIG. 5 or FIG. 17) disposed on one of the first surface and the second surface that faces the circuit board, and electrically connected to the transmission line, and a first ground terminal (e.g., the first ground terminal G1 in FIG. 5 or FIG. 17) disposed on the one of the first surface and the second surface that faces the circuit board and electrically connected to the ground conductor. In an embodiment, at least one of the signal terminal and the first ground terminal may be electrically connected to the circuit board.

According to one embodiment, the electronic device described above may further include at least one contact member (e.g., the contact member 345 in FIG. 5 or FIG. 17) disposed on the circuit board at a position corresponding to the signal terminal or the first ground terminal, such that the at least one contact member may provide an electrical connection between the signal terminal (or the first ground terminal) and the circuit board.

According to one embodiment, the above-described electronic device may further include a second plate (e.g., the first support member 211 or the second plate 311 in FIGS. 3 to 5, FIG. 10 and/or FIG. 17) disposed to at least partially face the first plate with the circuit board interposed therebetween, and at least one second ground terminal (e.g., the second ground terminal G2 in FIG. 5) disposed on one of the first plate and the second plate and electrically connected to the ground conductor. In an embodiment, the second ground terminal may electrically connect the ground conductor to the second plate. In an embodiment, the second plate may comprise an electrically conductive material.

According to one embodiment, the above-described electronic device may further include an electromagnetic shield member (e.g., the electromagnetic shield member 493 in FIG. 10 or FIG. 17) disposed on the circuit board, and at least one second ground terminal (e.g., the second ground terminal G2 in FIG. 17) disposed on one of the first surface and the second surface and electrically connected to the ground conductor. In an embodiment, the second ground terminal may electrically connect the ground conductor to the electromagnetic shield member.

According to one embodiment, the transmission line may include a conductive pattern extending along a predetermined trajectory and having a first line width (e.g., the first line width W1 in FIG. 8). In an embodiment, the ground conductor may include a conductive pattern at least partially extending in parallel to the transmission line and at least partially having a second line width (e.g., the second line width W2 in FIG. 8) greater than the first line width.

According to an embodiment, the electronic device described may further include a matching line (e.g., the matching line 359 in FIG. 6) electrically interconnecting the transmission line and the radiation conductor pattern. In an embodiment, the radiation conductor pattern may be disposed on the same surface as the transmission line of the first surface and the second surface. In an embodiment, the matching line may have the first line width at a point connected to the transmission line, and may have a line width that gradually increases or gradually decreases in a direction away from the transmission line.

According to an embodiment, the above-described electronic device may further include a signal terminal disposed on one of the first surface and the second surface that faces the circuit board, and electrically connected to the transmission line, a first ground terminal disposed on the one of the first surface and the second surface that faces the circuit board, and electrically connected to the ground conductor, a second plate disposed to at least partially face the first plate with the circuit board interposed therebetween, and at least one second ground terminal disposed on one of the first plate and the second plate and electrically connected to the ground conductor. In an embodiment, the radiation conductor pattern may be disposed on one of the first surface and the second surface not to overlap the ground conductor. In an embodiment, the second ground terminal may electrically connect the ground conductor to the second plate.

According to an embodiment, the first ground terminal may be disposed adjacent to one end of the transmission line, and the second ground terminal may be disposed adjacent to the other end of the transmission line.

According to an embodiment, the first ground terminal may be disposed adjacent to the signal terminal. In an embodiment, the second ground terminal may be disposed adjacent to the radiation conductor pattern.

According to an embodiment, the electronic device described above may further include a wiring recess (e.g., the wiring recess(es) 361a and 361b in FIG. 9) provided in at least one of the first surface and the second surface. In an embodiment, the transmission line, the radiation conductor pattern, or the ground conductor may be at least partially disposed within the wiring recess.

According to an embodiment, the above-described electronic device may further include a first wiring recess provided in the first surface, and a second wiring recess provided in the second surface. In an embodiment, wherein the transmission line, the radiation conductor pattern, or the ground conductor may be individually disposed in one of the first wiring recess and the second wiring recess.

According to an embodiment, the above-described electronic device may further include an electrical component (e.g., the camera assembly 207 in FIG. 4, the speaker 371 in FIG. 5 or FIG. 10, and/or the connector 491 and the electromagnetic shielding member 493 in FIG. 10) disposed on one side of the circuit board inside the housing. In an embodiment, the transmission line or the ground conductor may be disposed to at least partially overlap the electrical component when viewed from one of the first surface and second surface.

According to an embodiment, the electronic component may include an electromagnetic shield member, a speaker, or a camera module.

According to an embodiment, the transmission line, the radiation conductor pattern, or the ground conductor may include a laser direct structure pattern.

According to an embodiment, an electronic device (e.g., the electronic device 100, 200, 300, 400, or 500 in FIGS. 1 to 5, FIG. 10, and/or FIG. 17) may include a housing (e.g., the housing 201 or 301 in FIGS. 1 to 5, FIG. 10 and/or FIG. 17), a circuit board (e.g., the circuit board 240 or 340 in FIGS. 3 to 5, FIG. 10 and/or FIG. 17) accommodated inside the housing, a first plate (e.g., the second support member 260 in FIG. 4 or the first plate 360a or 360b in FIGS. 5 to 17) disposed inside the housing to at least partially face the circuit board and including a dielectric material, a transmission line (e.g., the transmission line 351 in FIGS. 5 to 9 and/or FIG. 17) disposed on a first one of the opposite surfaces of the first plate, extending a predetermined trajectory, and electrically connected to the circuit board, the first line width (e.g., the first line width W1 in FIG. 8), a ground conductor (e.g., the ground conductor355 in FIGS. 5 to 9 and/or FIG. 17) disposed on a second one of the opposite surfaces of the first plate, extending at least partially in parallel to the transmission line, and electrically connected to the circuit board, the ground conductor having a second line width (e.g., the second line width W2 in FIG. 8) greater than the first line width, and a radiation conductor pattern (e.g., the radiation conductor pattern 353 in FIGS. 5 to 9 and/or FIG. 17) disposed on one of the first surface and the second surface and electrically connected to one end of the transmission line. In an embodiment, the transmission line may be configured to transmit a wireless communication signal transmitted or received via the radiation conductor pattern. In an embodiment, the transmission line may be disposed to at least partially overlap the ground conductor when viewed from one of the first surface and second surface. In an embodiment, the radiation conductor pattern may be disposed not to overlap the ground conductor.

According to an embodiment, the above-described electronic device may further include a signal terminal (e.g., the signal terminal S in FIG. 5 or FIG. 17) disposed on one of the first surface and the second surface that faces the circuit board, and electrically connected to the transmission line, and a first ground terminal (e.g., the first ground terminal G1 in FIG. 5 or FIG. 17) disposed on the one of the first surface and the second surface that faces the circuit board and electrically connected to the ground conductor. In an embodiment, at least one of the signal terminal and the first ground terminal may be electrically connected to the circuit board.

According to an embodiment, the above-described electronic device may further include a second plate (e.g., the first support member 211 or the second plate 311 in FIGS. 3 to 5, FIG. 10, and/or FIG. 17) disposed to at least partially face the first plate with the circuit board interposed therebetween, and including an electrically conductive material, and at least one second ground terminal (e.g., the second ground terminal G2 in FIG. 5) disposed on one of the first plate and the second plate and electrically connected to the ground conductor. In an embodiment, the second ground terminal may electrically connect the ground conductor to the second plate.

According to an embodiment, the first ground terminal may be disposed adjacent to the signal terminal. In an embodiment, the second ground terminal may be disposed adjacent to the radiation conductor pattern.

According to an embodiment, the above-described electronic device may further include an electrical component (e.g., the camera assembly in FIG. 4, the speaker 371 in FIG. 5 or FIG. 10, and/or the connector 491 and the electromagnetic shielding member 493 in FIG. 10) disposed on one side of the circuit board inside the housing. In an embodiment, the transmission line or the ground conductor may be disposed to at least partially overlap the electrical component when viewed from one of the first surface and second surface.

Although the disclosure has been described with reference to embodiments as examples, it should be understood that the embodiments are intended to exemplify the disclosure, rather than to limit the disclosure. It will be apparent to those skilled in the art that various changes can be made in form and detail without departing from the overall scope of the disclosure, including the appended claims and equivalents to the same. For example, in the configuration of the upper support member 260a or the second plate 360a, the radiation conductor pattern may be disposed on the same plane as the ground conductor, as in the embodiment of FIG. 13. According to an embodiment, an embodiment in which a transmission line and a radiation conductor pattern are disposed on the inner surface of the upper support member 260a or the second plate 360a, and a ground conductor is disposed on the outer surface of the upper support member 260a or the second plate 360a may be implemented. In an embodiment, the signal terminal and the transmission lines may be disposed on the same surface or on different surfaces of the first plate, and the arrangement of the ground terminal(s) and the ground conductor may be similar thereto. For example, the signal terminal and the ground terminal(s) may be disposed on the surface facing the circuit board on the first plate, and the surface on which the transmission line and the ground conductor are disposed may be variously selected.

## Claims

1. An electronic device (100, 200, 300, 400, 500) comprising:
a housing (201, 301) including a second plate (211, 311);
a display (230) disposed on one surface of the second plate (211, 311);
a circuit board (240, 340) accommodated inside the housing (201, 301) and disposed on the other surface of the second plate (211, 311);
a first plate (260, 360a, 360b) disposed inside the housing (201, 301) to at least partially face the second plate (211, 311) with the circuit board (240, 340) interposed therebetween;
a transmission line (351) disposed on a first surface (F1) of opposite surfaces of the first plate (260, 360a, 360b) and electrically connected to the circuit board (240, 340);
a ground conductor (355) disposed on a second surface (F2) of the opposite surfaces of the first plate (260, 360a, 360b) and electrically connected to the circuit board (240, 340); and
a radiation conductor pattern (353) disposed on the first surface (F1) or on the second surface (F2) and electrically connected to a first end of the transmission line (351),
wherein the housing (201, 301) is configured to provide a reference potential by being electrically connected to a ground plane of the circuit board (240, 340), and
wherein the transmission line (351) is disposed to at least partially overlap the ground conductor (355) when viewed from one of the first surface (F1) and second surface (F2), and the transmission line (351) is configured to transmit a wireless communication signal transmitted or received via the radiation conductor pattern (353).

2. The electronic device (100, 200, 300, 400, 500) of claim 1, wherein the radiation conductor pattern (353) is disposed not to overlap the ground conductor (355) when viewed from one of the first surface (F1) and second surface (F2).

3. The electronic device (100, 200, 300, 400, 500) of any one of the preceding claims, further comprising:
a signal terminal (S) disposed on one of the first surface (F1) and the second surface (F2) that faces the circuit board (240, 340), and electrically connected to the transmission line (351); and
a first ground terminal (G1) disposed on the one of the first surface (F1) and the second surface (F2) that faces the circuit board (240, 340), and electrically connected to the ground conductor (355),
wherein at least one of the signal terminal (S) and the first ground terminal (G1) is electrically connected to the circuit board (240, 340).

4. The electronic device (100, 200, 300, 400, 500) of claim 3, further comprising:
at least one contact member (345) disposed on the circuit board (240, 340) at a position corresponding to the signal terminal (S) or the first ground terminal (G1).

5. The electronic device (100, 200, 300, 400, 500) of any one of the preceding claims, further comprising:
at least one second ground terminal (G2) disposed on one of the first plate (260, 360a, 360b) and the second plate (211, 311) and electrically connected to the ground conductor (355),
wherein the second ground terminal (G2) is configured to electrically connect the ground conductor (355) to the second plate (211, 311).

6. The electronic device (100, 200, 300, 400, 500) of any one of the preceding claims, further comprising:
an electromagnetic shield member (493) disposed on the circuit board (240, 340); and
at least one second ground terminal (G2) disposed on one of the first surface (F1) and the second surface (F2) and electrically connected to the ground conductor (355),
wherein the second ground terminal (G2) is configured to electrically connect the ground conductor (355) to the electromagnetic shield member (493).

7. The electronic device (100, 200, 300, 400, 500) of any one of the preceding claims, wherein the transmission line (351) comprises a conductive pattern extending along a predetermined trajectory and having a first line width (W1), and
the ground conductor (355) comprises another conductive pattern at least partially extending in parallel to the transmission line (351) and at least partially having a second line width (W2) greater than the first line width (W1).

8. The electronic device (100, 200, 300, 400, 500) of claim 7, further comprising:
a matching line (359) electrically interconnecting the transmission line (351) and the radiation conductor pattern (353),
wherein the radiation conductor pattern (353) is disposed on a same surface as the transmission line (351) of the first surface (F1) and the second surface (F2), and
wherein the matching line (359) has the first line width (W1) at a point connected to the transmission line (351), and has a line width that gradually increases or decreases in a direction (-X) away from the transmission line (351).

9. The electronic device (100, 200, 300, 400, 500) of claim 1, further comprising:
a signal terminal (S) disposed on one of the first surface (F1) and the second surface (F2) that faces the circuit board (240, 340), and electrically connected to the transmission line (351);
a first ground terminal (G1) disposed on the one of the first surface (F1) and the second surface (F2) that faces the circuit board (240, 340), and electrically connected to the ground conductor (355); and
at least one second ground terminal (G2) disposed on one of the first plate (260, 360a, 360b) and the second plate (211, 311) and electrically connected to the ground conductor (355),
wherein the radiation conductor pattern (353) is disposed on one of the first surface (F1) and the second surface (F2) not to overlap the ground conductor (355) when viewed from one of the first surface (F1) and second surface (F2), and
wherein the second ground terminal (G2) is configured to electrically connect the ground conductor (355) to the second plate (211, 311).

10. The electronic device (100, 200, 300, 400, 500) of any one of claims 5 or 9, wherein the first ground terminal (G1) is disposed adjacent to a second end of the transmission line (351), and the second ground terminal (G2) is disposed adjacent to the first end of the transmission line (351); or
wherein the first ground terminal (G1) is disposed adjacent to the signal terminal (S), and the second ground terminal (G2) is disposed adjacent to the radiation conductor pattern (353).

11. The electronic device (100, 200, 300, 400, 500) of any one of the preceding claims, further comprising:
a wiring recess (361a, 361b) provided in at least one of the first surface (F1) and the second surface (F2),
wherein the transmission line (351), the radiation conductor pattern (353), or the ground conductor (355) is at least partially disposed within the wiring recess (361a, 361b).

12. The electronic device (100, 200, 300, 400, 500) of any one of the claims 1 to 10, further comprising:
a first wiring recess (361a) provided in the first surface (F1); and
a second wiring recess (361b) provided in the second surface (F2),
wherein the transmission line (351), the radiation conductor pattern (353), or the ground conductor (355) is disposed in one of the first wiring recess (361a) and the second wiring recess (361b), respectively.

13. The electronic device (100, 200, 300, 400, 500) of any one of the preceding claims, further comprising:
an electrical component (207, 371, 491, 493) disposed on one side of the circuit board (240, 340) within the housing (201, 301),
wherein the transmission line (351) or the ground conductor (355) is disposed to at least partially overlap the electrical component (207, 371, 491, 493) when viewed from one of the first surface (F1) and second surface (F2).

14. The electronic device (100, 200, 300, 400, 500) of any one of the claims 2 to 6 and 10 to 13, wherein the first plate (260, 360a, 360b) comprises a dielectric material;
wherein the transmission line (351) has a first line width (W1) and extends along a predetermined trajectory; and
wherein the ground conductor (355) has a second line width (W2) greater than the first line width (W1) and extends at least partially in parallel to the transmission line (351).

## Patentansprüche

1. Elektronische Vorrichtung (100, 200, 300, 400, 500), umfassend:
ein Gehäuse (201, 301) mit einer zweiten Platte (211, 311);
eine Anzeige (230), das auf einer Oberfläche der zweiten Platte (211, 311) angeordnet ist;
eine Leiterplatte (240, 340), die innerhalb des Gehäuses (201, 301) untergebracht und auf der anderen Oberfläche der zweiten Platte (211, 311) angeordnet ist;
eine erste Platte (260, 360a, 360b), die innerhalb des Gehäuses (201, 301) angeordnet ist, um der zweiten Platte (211, 311) mindestens teilweise gegenüberzuliegen, wobei die Leiterplatte (240, 340) zwischen diesen angeordnet ist;
eine Übertragungsleitung (351), die auf einer ersten Oberfläche (F1) von gegenüberliegenden Oberflächen der ersten Platte (260, 360a, 360b) angeordnet und elektrisch mit der Leiterplatte (240, 340) verbunden ist;
einen Masseleiter (355), der auf einer zweiten Oberfläche (F2) der gegenüberliegenden Oberflächen der ersten Platte (260, 360a, 360b) angeordnet und elektrisch mit der Leiterplatte (240, 340) verbunden ist; und
ein Strahlungsleitermuster (353), das auf der ersten Oberfläche (F1) oder auf der zweiten Oberfläche (F2) angeordnet und elektrisch mit einem ersten Ende der Übertragungsleitung (351) verbunden ist,
wobei das Gehäuse (201, 301) dazu konfiguriert ist, ein Referenzpotential bereitzustellen, indem es elektrisch mit einer Massefläche der Leiterplatte (240, 340) verbunden ist, und
wobei die Übertragungsleitung (351) so angeordnet ist, dass sie mindestens teilweise den Masseleiter (355) überlappt, wenn von der ersten Oberfläche (F1) oder der zweiten Oberfläche (F2) aus betrachtet, und wobei die Übertragungsleitung (351) dazu konfiguriert ist, ein drahtloses Kommunikationssignal zu übertragen, das über das Strahlungsleitermuster (353) gesendet oder empfangen wird.

2. Elektronische Vorrichtung (100, 200, 300, 400, 500) nach Anspruch 1, wobei das Strahlungsleitermuster (353) so angeordnet ist, dass es nicht mit dem Masseleiter (355) überlappt, wenn von der ersten Oberfläche (F1) oder der zweiten Oberfläche (F2) aus betrachtet.

3. Elektronische Vorrichtung (100, 200, 300, 400, 500) nach einem der vorhergehenden Ansprüche, ferner umfassend:
einen Signalanschluss (S), der auf einer der ersten Oberfläche (F1) und der zweiten Oberfläche (F2), die der Leiterplatte (240, 340) zugewandt ist, angeordnet und elektrisch mit der Übertragungsleitung (351) verbunden ist; und
einen ersten Masseanschluss (G1), der auf der einen der ersten Oberfläche (F1) und der zweiten Oberfläche (F2), die der Leiterplatte (240, 340) zugewandt ist, angeordnet und elektrisch mit dem Masseleiter (355) verbunden ist,
wobei mindestens einer aus dem Signalanschluss (S) und dem ersten Masseanschluss (G1) elektrisch mit der Leiterplatte (240, 340) verbunden ist.

4. Elektronische Vorrichtung (100, 200, 300, 400, 500) nach Anspruch 3, ferner umfassend:
mindestens ein Kontaktelement (345), das auf der Leiterplatte (240, 340) an einer Position entsprechend dem Signalanschluss (S) oder dem ersten Masseanschluss (G1) angeordnet ist.

5. Elektronische Vorrichtung (100, 200, 300, 400, 500) nach einem der vorhergehenden Ansprüche, ferner umfassend:
mindestens einen zweiten Masseanschluss (G2), der auf einer der ersten Platte (260, 360a, 360b) und der zweiten Platte (211, 311) angeordnet und elektrisch mit dem Masseleiter (355) verbunden ist,
wobei der zweite Masseanschluss (G2) dazu konfiguriert ist, den Masseleiter (355) elektrisch mit der zweiten Platte (211, 311) zu verbinden.

6. Elektronische Vorrichtung (100, 200, 300, 400, 500) nach einem der vorhergehenden Ansprüche, ferner umfassend:
ein elektromagnetisches Abschirmelement (493), das auf der Leiterplatte (240, 340) angeordnet ist; und
mindestens einen zweiten Masseanschluss (G2), der auf einer der ersten Oberfläche (F1) und der zweiten Oberfläche (F2) angeordnet und elektrisch mit dem Masseleiter (355) verbunden ist,
wobei der zweite Masseanschluss (G2) dazu konfiguriert ist, den Masseleiter (355) elektrisch mit dem elektromagnetischen Abschirmelement (493) zu verbinden.

7. Elektronische Vorrichtung (100, 200, 300, 400, 500) nach einem der vorhergehenden Ansprüche, wobei die Übertragungsleitung (351) ein leitendes Muster aufweist, das sich entlang einer vorbestimmten Trajektorie erstreckt und eine erste Leitungsbreite (W1) aufweist, und
der Masseleiter (355) ein weiteres leitendes Muster umfasst, das sich mindestens teilweise parallel zur Übertragungsleitung (351) erstreckt und mindestens teilweise eine zweite Leitungsbreite (W2) aufweist, die größer als die erste Leitungsbreite (W1) ist.

8. Elektronische Vorrichtung (100, 200, 300, 400, 500) nach Anspruch 7, ferner umfassend:
eine Anpassungsleitung (359), die die Übertragungsleitung (351) und das Strahlungsleitermuster (353) elektrisch miteinander verbindet,
wobei das Strahlungsleitermuster (353) auf einer gleichen Oberfläche wie die Übertragungsleitung (351) der ersten Oberfläche (F1) und der zweiten Oberfläche (F2) angeordnet ist, und
wobei die Anpassungsleitung (359) die erste Leitungsbreite (W1) an einem Punkt aufweist, der mit der Übertragungsleitung (351) verbunden ist, und eine Leitungsbreite aufweist, die in einer Richtung (-X) weg von der Übertragungsleitung (351) allmählich zunimmt oder abnimmt.

9. Elektronische Vorrichtung (100, 200, 300, 400, 500) nach Anspruch 1, ferner umfassend:
einen Signalanschluss (S), der auf einer der ersten Oberfläche (F1) und der zweiten Oberfläche (F2), die der Leiterplatte (240, 340) zugewandt ist, angeordnet und elektrisch mit der Übertragungsleitung (351) verbunden ist;
einen ersten Masseanschluss (G1), der auf der einen der ersten Oberfläche (F1) und der zweiten Oberfläche (F2), die der Leiterplatte (240, 340) zugewandt ist, angeordnet und elektrisch mit dem Masseleiter (355) verbunden ist; und
mindestens einen zweiten Masseanschluss (G2), der auf einer der ersten Platte (260, 360a, 360b) und der zweiten Platte (211, 311) angeordnet und elektrisch mit dem Masseleiter (355) verbunden ist,
wobei das Strahlungsleitermuster (353) auf einer der ersten Oberfläche (F1) und der zweiten Oberfläche (F2) so angeordnet ist, dass es den Masseleiter (355) nicht überlappt, wenn von einer der ersten Oberfläche (F1) und zweiten Oberfläche (F2) aus betrachtet, und
wobei der zweite Masseanschluss (G2) dazu konfiguriert ist, den Masseleiter (355) elektrisch mit der zweiten Platte (211, 311) zu verbinden.

10. Elektronische Vorrichtung (100, 200, 300, 400, 500) nach einem der Ansprüche 5 oder 9, wobei der erste Masseanschluss (G1) benachbart zu einem zweiten Ende der Übertragungsleitung (351) angeordnet ist und der zweite Masseanschluss (G2) benachbart zum ersten Ende der Übertragungsleitung (351) angeordnet ist; oder
wobei der erste Masseanschluss (G1) benachbart zum Signalanschluss (S) angeordnet ist und der zweite Masseanschluss (G2) benachbart zum Strahlungsleitermuster (353) angeordnet ist.

11. Elektronische Vorrichtung (100, 200, 300, 400, 500) nach einem der vorhergehenden Ansprüche, ferner umfassend:
eine Leitungsvertiefung (361a, 361b), die in mindestens einer der ersten Oberfläche (F1) und der zweiten Oberfläche (F2) ausgebildet ist,
wobei die Übertragungsleitung (351), das Strahlungsleitermuster (353) oder der Masseleiter (355) mindestens teilweise innerhalb der Leitungsvertiefung (361a, 361b) angeordnet ist.

12. Elektronische Vorrichtung (100, 200, 300, 400, 500) nach einem der Ansprüche 1 bis 10, ferner umfassend:
eine erste Leitungsvertiefung (361a), die in der ersten Oberfläche (F1) ausgebildet ist; und
eine zweite Leitungsvertiefung (361b), die in der zweiten Oberfläche (F2) ausgebildet ist,
wobei die Übertragungsleitung (351), das Strahlungsleitermuster (353) oder der Masseleiter (355) jeweils in einer der ersten Leitungsvertiefung (361a) und der zweiten Leitungsvertiefung (361b) angeordnet ist.

13. Elektronische Vorrichtung (100, 200, 300, 400, 500) nach einem der vorhergehenden Ansprüche, ferner umfassend:
ein elektrisches Bauteil (207, 371, 491, 493), das auf einer Seite der Leiterplatte (240, 340) innerhalb des Gehäuses (201, 301) angeordnet ist,
wobei die Übertragungsleitung (351) oder der Masseleiter (355) dazu angeordnet ist, mindestens teilweise das elektrische Bauteil (207, 371, 491, 493) zu überlappen, wenn von einer der ersten Oberfläche (F1) und zweiten Oberfläche (F2) aus betrachtet.

14. Elektronische Vorrichtung (100, 200, 300, 400, 500) nach einem der Ansprüche 2 bis 6 und 10 bis 13, wobei die erste Platte (260, 360a, 360b) ein dielektrisches Material umfasst;
wobei die Übertragungsleitung (351) eine erste Leitungsbreite (W1) aufweist und sich entlang einer vorbestimmten Trajektorie erstreckt; und
wobei der Masseleiter (355) eine zweite Leitungsbreite (W2) aufweist, die größer als die erste Leitungsbreite (W1) ist, und sich mindestens teilweise parallel zur Übertragungsleitung (351) erstreckt.

## Revendications

1. Dispositif électronique (100, 200, 300, 400, 500) comprenant :
un logement (201, 301) incluant une deuxième plaque (211,311) ;
un écran (230) agencé sur une surface de la deuxième plaque (211,311) ;
une carte de circuit imprimé (240, 340) logée à l'intérieure du logement (201, 301) et agencée sur l'autre surface de la deuxième plaque (211,311) ;
une première plaque (260, 360a, 360b) agencée à l'intérieure du logement (201, 301) afin de faire face au moins partiellement à la deuxième plaque (211,311) la carte de circuit imprimé (240, 340) étant interposée entre ;
une ligne de transmission (351) agencée sur une première surface (F1) des surfaces opposées de la première plaque (260, 360a, 360b) et raccordée électriquement à la carte de circuit imprimé (240, 340) ;
un conducteur de masse (355) agencé sur la deuxième surface (F2) des surfaces opposées de la première plaque (260, 360a, 360b) et raccordé électriquement à la carte de circuit imprimé (240, 340) ; et
un motif conducteur de rayonnement (353) agencé sur la première surface (F1) ou sur la deuxième surface (F2) et raccordé électriquement à une première terminaison de la ligne de transmission (351),
dans lequel le logement (201, 301) est configuré pour fournir un potentiel de référence en étant raccordé électriquement à un plan de masse de la carte de circuit imprimé (240, 340), et
dans lequel la ligne de transmission (351) est agencée pour chevaucher au moins partiellement le conducteur de masse (355) lorsque vu de l'une parmi la première surface (F1) et la deuxième surface (F2), et la ligne de transmission (351) est configurée pour transmettre un signal de communication sans fil transmis ou reçu via le motif conducteur de rayonnement (353).

2. Dispositif électronique (100, 200, 300, 400, 500) selon la revendication 1, dans lequel le motif conducteur de rayonnement (353) est agencé pour ne pas chevaucher le conducteur de masse (355) lorsque vu de l'une parmi la première surface (F1) et la deuxième surface (F2).

3. Dispositif électronique (100, 200, 300, 400, 500) selon l'une quelconque des revendications précédentes, comprenant en outre :
une borne de signal (S) agencée sur l'une parmi la première surface (F1) et la deuxième surface (F2) qui fait face à la carte de circuit imprimé (240, 340), et raccordée électriquement à la ligne de transmission (351) ; et
une première borne de masse (G1) agencée sur l'une parmi la première surface (F1) et la deuxième surface (F2) qui fait face à la carte de circuit imprimé (240, 340), et raccordée électriquement au conducteur de masse (355),
dans lequel au moins un élément parmi la borne de signal (S) et la première borne de masse (G1) est raccordé électriquement à la carte de circuit imprimé (240, 340).

4. Dispositif électronique (100, 200, 300, 400, 500) selon la revendication 3, comprenant en outre :
au moins un élément de contact (345) agencé sur la carte de circuit imprimé (240, 340) à une position correspondant à la borne de signal (S) ou à la première borne de masse (G1).

5. Dispositif électronique (100, 200, 300, 400, 500) selon l'une quelconque des revendications précédentes, comprenant en outre :
au moins une deuxième borne de masse (G2) agencée sur l'une parmi la première plaque (260, 360a, 360b) et la deuxième plaque (211,311) et raccordée électriquement au conducteur de masse (355),
dans lequel la deuxième borne de masse (G2) est configurée pour raccorder électriquement le conducteur de masse (355) à la deuxième plaque (211,311).

6. Dispositif électronique (100, 200, 300, 400, 500) selon l'une quelconque des revendications précédentes, comprenant en outre :
un élément de blindage électromagnétique (493) agencé sur la carte de circuit imprimé (240, 340) ; et
au moins une deuxième borne de masse (G2) agencée sur l'une parmi la première surface (F1) et la deuxième surface (F2) et raccordée électriquement au conducteur de masse (355),
dans lequel la deuxième borne de masse (G2) est configurée pour raccorder électriquement le conducteur de masse (355) à l'élément de blindage électromagnétique (493).

7. Dispositif électronique (100, 200, 300, 400, 500) selon l'une quelconque des revendications précédentes, dans lequel la ligne de transmission (351) comprend un motif conducteur s'étendant le long d'une trajectoire prédéterminée et dotée d'une première largeur de ligne (W1), et
le conducteur de masse (355) comprend un autre motif conducteur s'étendant au moins partiellement en parallèle de la ligne de transmission (351) et doté au moins partiellement d'une deuxième largeur de ligne (W2) supérieure à la première largeur de ligne (W1).

8. Dispositif électronique (100, 200, 300, 400, 500) selon la revendication 7, comprenant en outre :
une ligne de correspondance (359) interconnectant électriquement la ligne de transmission (351) et le motif conducteur de rayonnement (353),
dans lequel le motif conducteur de rayonnement (353) est agencé sur la même surface que la ligne de transmission (351) de la première surface (F1) et de la deuxième surface (F2), et
dans lequel la ligne de correspondance (359) est dotée de la première largeur de ligne (W1) à un point raccordé à la ligne de transmission (351), et est dotée d'une largeur de ligne qui augmente ou diminue graduellement dans un sens (-X) distal de la ligne de transmission (351).

9. Dispositif électronique (100, 200, 300, 400, 500) selon la revendication 1, comprenant en outre :
une borne de signal (S) agencée sur l'une parmi la première surface (F1) et la deuxième surface (F2) qui fait face à la carte de circuit imprimé (240, 340), et raccordée électriquement à la ligne de transmission (351) ;
une première borne de masse (G1) agencée sur l'une parmi la première surface (F1) et la deuxième surface (F2) qui fait face à la carte de circuit imprimé (240, 340), et raccordée électriquement au conducteur de masse (355) ; et
au moins une deuxième borne de masse (G2) agencée sur l'une parmi la première plaque (260, 360a, 360b) et la deuxième plaque (211,311) et raccordée électriquement au conducteur de masse (355),
dans lequel le motif conducteur de rayonnement (353) est agencé sur l'une parmi la première surface (F1) et la deuxième surface (F2) pour ne pas chevaucher le conducteur de masse (355) lorsque vu de l'une parmi la première surface (F1) et la deuxième surface (F2), et
dans lequel la deuxième borne de masse (G2) est configurée pour raccorder électriquement le conducteur de masse (355) à la deuxième plaque (211,311).

10. Dispositif électronique (100, 200, 300, 400, 500) selon l'une quelconque des revendications 5 ou 9, dans lequel la première borne de masse (G1) est agencée adjacente à une deuxième terminaison de la ligne de transmission (351), et la deuxième borne de masse (G2) est agencée adjacente à la première terminaison de la ligne de transmission (351) ; ou dans lequel la première borne de masse (G1) est agencée adjacente à la borne de signal (S), et la deuxième borne de masse (G2) est agencée adjacente au motif conducteur de rayonnement (353).

11. Dispositif électronique (100, 200, 300, 400, 500) selon l'une quelconque des revendications précédentes, comprenant en outre :
un renfoncement de câblage (361a, 361b) agencé dans au moins l'une parmi la première surface (F1) et la deuxième surface (F2),
dans lequel la ligne de transmission (351), le motif conducteur de rayonnement (353), ou le conducteur de masse (355) est au moins partiellement agencé dans le renfoncement de câblage (361a, 361b).

12. Dispositif électronique (100, 200, 300, 400, 500) selon l'une quelconque des revendications 1 à 10, comprenant en outre :
un premier renfoncement de câblage (361a) agencé dans la première surface (F1) ; et
un deuxième renfoncement de câblage (361b) agencé dans la deuxième surface (F2),
dans lequel la ligne de transmission (351), le motif conducteur de rayonnement (353), ou le conducteur de masse (355) sont agencés dans l'un parmi le premier renfoncement de câblage (361a) et le deuxième renfoncement de câblage (361b), respectivement.

13. Dispositif électronique (100, 200, 300, 400, 500) selon l'une quelconque des revendications précédentes, comprenant en outre :
un composant électrique (207, 371, 491, 493) agencé sur un côté de la carte de circuit imprimé (240, 340) à l'intérieur du logement (201, 301),
dans lequel la ligne de transmission (351) ou le conducteur de masse (355) est agencé pour chevaucher au moins partiellement le composant électrique (207, 371, 491, 493) lorsque vu de l'une parmi la première surface (F1) et la deuxième surface (F2).

14. Dispositif électronique (100, 200, 300, 400, 500) selon l'une quelconque des revendications 2 à 6 et 10 à 13, dans lequel la première plaque (260, 360a, 360b) comprend un matériau diélectrique ;
dans lequel la ligne de transmission (351) est dotée d'une première largeur de ligne (W1) et s'étend le long d'une trajectoire prédéterminée ; et
dans lequel le conducteur de masse (355) est dotée d'une deuxième largeur de ligne (W2) supérieure à la première largeur de ligne (W1) et s'étend au moins partiellement en parallèle à la ligne de transmission (351).
